# EUROPÄISCHE PATENTSCHRIFT

(11) **EP 1 728 163 B1**
(45) Veröffentlichungstag und Bekanntmachung des Hinweises auf die Patenterteilung: **17.02.2016**
(21) Anmeldenummer: 05715946.9
(22) Anmeldetag: 11.03.2005
(51) Int. Cl.: G06F 13/00, H04L 12/40, H04L 29/06, B60R 16/02

(54) **KOMMUNIKATIONSSYSTEM F R EIN KRAFTFAHRZEUG**
COMMUNICATION SYSTEM FOR A MOTOR VEHICLE
SYSTEME DE COMMUNICATION POUR AUTOMOBILE

(30) Priorität: 19.03.2004 DE 102004013629
(43) Veröffentlichungstag der Anmeldung: 06.12.2006
(73) Patentinhaber: AUDI AKTIENGESELLSCHAFT, 85045 Ingolstadt (DE); Volskswagen Aktiengesellschaft, 38436 Wolfsburg (DE)
(72) Erfinder: WILLE, Frank-Martin, 85080 Gaimersheim (DE); ESSER, Holger, 85049 Ingolstadt (DE); VASSEN, Heinz-Willi, 85114 Buxheim (DE); AMMLER, Tobias, 86673 Unterstall (DE); AMMLER, Norbert, 86673 Bergheim (DE); LEBMEIER, Helmut, 86571 Langenmosen (DE); GROSS, Yvonne, 66117 Saarbrücken (DE); JUNG, Hans-Christian, 85049 Ingolstadt (DE); LEINFELDER, Rudolf, 85072 Eichstätt (DE); KÖTZ, Jens, 85117 Eitensheim (DE); KRÖMKE, Carsten, 38126 Braunschweig (DE); ANDERLIK, Stefan, 14813 Zellendorf (DE); PENSHORN, Christian, 31234 Edemissen (DE); WENZEL, Matthias, 32756 Detmold (DE)
(74) Vertreter: Mader, Wilfried
(86) Internationale Anmeldenummer: PCT/EP2005/002573
(87) Internationale Veröffentlichungsnummer: WO 2005/093584

(56) Entgegenhaltungen:
- EP-A- 0 978 433
- DE-A1- 10 044 891
- DE-A1- 10 044 892
- DE-A1- 19 839 354

## Beschreibung

Die Erfindung betrifft ein Kommunikationssystem für ein Kraftfahrzeug zur Übertragung einer den Betrieb des Kraftfahrzeuges betreffenden Information von einem sendenden Steuergerät zu einem empfangenden Steuergerät

Aus der DE 100 44 892 A1 ist ein Verfahren zum Betrieb einer multifunktionalen Anzeigeeinrichtung in einem Kraftfahrzeug bekannt, bei welchem durch die Anwahl eines Menüpunktes jeweils eine Funktion oder ein Parameter angezeigt bzw. neu angezeigt wird, wobei die Dateninhalte oder Meldungen verschiedener Aggregate im Kraftfahrzeug in einem mit der Anzeigeeinrichtung bidirektional korrespondierenden Steuergerät abgespeichert werden, und wobei einer aktuell gewählten Anzeige ein Prioritätswert zugeordnet ist oder wird, welcher zyklisch an das Steuergerät zurückgesendet wird, so dass erst dann wieder ein anderer Dateninhalt angezeigt wird, wenn er gesondert angewählt wird oder einen höheren Prioritätswert hat.

Aus der DE 100 44 891 A1 ist ein Verfahren zum Betrieb einer multifunktionalen menügeführten Anzeigeeinrichtung in einem Kraftfahrzeug bekannt, bei welchem durch die Anwahl eines Menüpunktes jeweils eine Funktion oder ein Parameter angezeigt bzw. neu angezeigt wird, wobei die Dateninhalte von Anzeigen verschiedener Aggregate im Kraftfahrzeug in einem mit der Anzeigeeinrichtung bidirektional korrespondierenden Steuergerät funktions- und/oder aggregatbezogen gespeichert werden, wobei bei Anwahl eines Menüpunktes zunächst nur eine Kopfzeile eines Speicherinhaltes angezeigt wird, und wobei nachfolgend durch eine entsprechende Tastschalterbetätigung der gesamte, auf die Kopfzeile bezogene Speicherinhalt übertragen und angezeigt wird. Dabei kann durch eine Menüwahl eine bidirektionale Frage/Antwortverbindung zwischen Steuergerät und Anzeigeeinrichtung aufgebaut bzw. gehalten werden. Die gewünschte Funktions- oder Parameteranzeige kann z.B. durch eine Rollfunktion (Scroll up/down) angewählt werden.

Die EP 0 978 433 A2 offenbart ein Verfahren zur Ausführung einer durch ein Kraftfahrzeugrechnersystem auszuführenden Software, wobei mehrere Anwendungsprogramme, die Funktionen des Kraftfahrzeugs verwirklichen, und mehrere Hardwareunterstützungsobjekte zur Ankopplung eines Anwendungsprogramms an Dateneingabevorrichtungen und Datenausgabevorrichtungen des Kraftfahrzeugs gespeichert werden, wobei eine Angabe eines der Anwendungsprogramme, wie sie durch einen Fahrzeugführer des Kraftfahrzeugs bezeichnet wird, empfangen wird, und wobei aus dem einen der Anwendungsprogramme eine Angabe wenigstens eines der mehreren Hardwareunterstützungsobjekte ausgelesen wird, das bzw. die von dem einen der Anwendungsprogramme benötigt wird bzw. werden.

Die DE 198 39 354 A1 offenbart ein Fahrzeugkommunikationssystem für ein Kraftfahrzeug mit mehreren Geräteeinheiten zum Senden, Empfangen, Erfassen und/oder Verarbeiten von Daten zum Ausführen von Applikationen, wobei die Geräteeinheiten mittels zugehörigen Hardwareschnittstellen mit einem gemeinsamen Datenbus verbunden sind, wobei Applikationen flexibel steuerbare Funktionen zugeordnet werden, wobei jeder Funktion jeweils eine Softwareschnittstelle zum Datenaustausch mit anderen Softwareschnittstellen und Hardwareschnittstellen zugeordnet ist, und wobei die Funktionen innerhalb beliebiger Geräteeinheiten ausgeführt werden.

Es ist Aufgabe der Erfindung, die Kosten bei der Herstellung eines Kraftfahrzeuges zu senken.

Vorgenannte Aufgabe wird durch ein Kommunikationssystem für ein Kraftfahrzeug zur Übertragung einer den Betrieb des Kraftfahrzeuges betreffenden Information von einem sendenden (auf dem Kraftfahrzeug angeordneten) Steuergerät zu einem empfangenden (auf dem Kraftfahrzeug angeordneten) Steuergerät gelöst, wobei das Kommunikationssystem eine Schnittstelle zur Eingabe und/oder Ausgabe der den Betrieb des Kraftfahrzeuges betreffenden Information umfasst, wobei über die Schnittstelle, insbesondere nur, mittels eines Protokolls kommunizierbar ist, das ein Operationsfeld zur Identifikation einer mittels der den Betrieb des Kraftfahrzeuges betreffenden information auszuführenden Aufgabe umfasst.

In vorteilhafter Ausgestaltung der Erfindung umfasst das Protokoll ein Datenfeld mit einem Wert für die den Betrieb des Kraftfahrzeuges betreffende Information. Es kann vorgesehen sein, dass das Datenfeld abhängig vom Inhalt des Operationsfeldes leer sein bzw. weggelassen werden kann.

In weiterhin vorteilhafter Ausgestaltung der Erfindung umfasst das Protokoll ein ID-Feld zur Identifikation der den Betrieb des Kraftfahrzeuges betreffenden Information.

In optionaler Ausgestaltung der Erfindung umfasst das Operationsfeld eine Information, die angibt, ob sich das Protokoll auf eine zu sendende oder eine empfangene Nachricht bezieht. Das Protokoll kann auch ein Informationsfeld zur Kennzeichnung einer zu sendenden oder einer empfangenen Nachricht umfassen. Ob es sich um eine zu sendende oder eine empfangene Nachricht handelt ergibt sich jedoch insbesondere aus dem Zusammenhang, wobei die Information des Informationsfeldes als Bestandteil des Protokolls bzw. des Operationsfeldes weggelassen werden kann.

In weiterhin vorteilhafter Ausgestaltung der Erfindung umfasst das Protokoll höchstens das Operationsfeld, das Datenfeld und das ID-Feld als wesentliche Information. Leer- oder Redundanzinformationen zur Umgehung dieses Merkmals sollen vorteilhafterweise mit umfasst sein.

In weiterhin vorteilhafter Ausgestaltung der Erfindung bezeichnet das ID-Feld eine Funktion, die der den Betrieb des Kraftfahrzeuges betreffenden Information zugeordnet ist und/oder von der die den Betrieb des Kraftfahrzeuges betreffenden Information erzeugt und/oder verarbeitet wird. Eine solche Funktion kann zum Beispiel die Funktion 'Klimaautomatik' sein. Die die Identifikation der den Betrieb des Kraftfahrzeuges betreffende Information als weiterer Bestandteil des ID-Feldes kann z.B. eine Soll-Temperatur für den Innenraum des Kraftfahrzeuges im Bereich des Fahrersitzes sein.

In besonders vorteilhafter Ausgestaltung der Erfindung umfasst das Protokoll keine Bezeichnung des sendenden Steuergerätes und/oder keine Bezeichnung des empfangenden Steuergerätes. Eine solche Bezeichnung bezeichnet die Hardware und ist von einer Funktion wie zum Beispiel der Funktion 'Klimaautomatik' zu unterscheiden. Eine Bezeichnung des sendenden Steuergerätes und/oder des empfangenden Steuergerätes lautet z.B. Steuergerät mit der Adresse 01001001. Die Bezeichnung der Funktion 'Klimaautomatik' ist jedoch unabhängig davon, ob die Funktion 'Klimaautomatik' auf dem Steuergerät mit der Adresse 01001001 oder dem Steuergerät mit der Adresse 01001111 implementiert ist. In besonders vorteilhafter Ausgestaltung der Erfindung ist der Inhalt des ID-Feldes unabhängig davon, ob von dem sendenden Steuergerät an das empfangende Steuergerät gesendet wird oder umgekehrt.

In weiterhin vorteilhafter Ausgestaltung der Erfindung kann das Operationsfeld als zulässigen Eintrag
- eine Anforderung zur Übersendung eines aktuellen Wertes der den Betrieb des Kraftfahrzeuges betreffenden Information,
- eine Aufforderung zur Änderung der den Betrieb des Kraftfahrzeuges betreffenden Information,
- eine Aufforderung zur Bestätigung einer Änderung der den Betrieb des Kraftfahrzeuges betreffenden Information,
- eine Kennzeichnung der Übersendung eines aktuellen Wertes der den Betrieb des Kraftfahrzeuges betreffenden Information,
- eine Kennzeichnung eines Neustartes einer der den Betrieb des Kraftfahrzeuges betreffenden Information zugeordneten Funktion und/oder
- eine Kennzeichnung eines der den Betrieb des Kraftfahrzeuges betreffenden Information zuzuordnenden Fehlers
umfassen.

In weiterhin vorteilhafter Ausgestaltung der Erfindung umfasst das Kommunikationssystem einen Informationsspeicher zur Speicherung der den Betrieb des Kraftfahrzeuges betreffenden Information. Ein derartiger Speicher ermöglicht es einer Anwendung, gezielt einzelne den Betrieb des Kraftfahrzeuges betreffende Informationen auszulesen. Ein derartiger Speicher ist von einem Ein-/Ausgabebuffer, z.B. zum Segmentieren von Nachrichten bzw. zum Kombinieren segmentierter Nachrichten, zu unterscheiden.

Vorgenannte Aufgabe wird zudem - insbesondere in Verbindung mit vorgenannten vorteilhaften Ausgestaltungen - durch ein Kommunikationssystem für ein Kraftfahrzeug zur Übertragung einer den Betrieb des Kraftfahrzeuges betreffenden Information von einem sendenden Steuergerät zu einem empfangenden Steuergerät gelöst, wobei das Kommunikationssystem ein Bussystem und eine von der Ausgestaltung des Bussystems unabhängige Schnittstelle zur Eingabe der über das Bussystem übertragenen und/oder Ausgabe der über das Bussystem zu übertragenden den Betrieb des Kraftfahrzeuges betreffenden Information umfasst.

In vorteilhafter Ausgestaltung der Erfindung wird über das Bussystem ein Busprotokoll übertragen, das sich im wesentlichen aus einem Schnittstellenprotokoll der Schnittstelle und, insbesondere vorangestellten, für das Bussystem spezifischen Daten zusammensetzt.

Vorgenannte Aufgabe wird zudem - insbesondere in Verbindung mit vorgenannten vorteilhaften Ausgestaltungen - durch ein Kommunikationssystem für ein Kraftfahrzeug zur Übertragung einer den Betrieb des Kraftfahrzeuges betreffenden Information von einem ersten (auf dem Kraftfahrzeug angeordneten) Steuergerät zu einem zweiten (auf dem Kraftfahrzeug angeordneten) Steuergerät gelöst, wobei das Kommunikationssystem eine Schnittstelle zur Eingabe und/oder Ausgabe der den Betrieb des Kraftfahrzeuges betreffenden Information umfasst, wobei über die Schnittstelle, insbesondere nur, mittels eines Protokolls kommunizierbar ist, das ein ID-Feld zur Identifikation einer Funktion, die der den Betrieb des Kraftfahrzeuges betreffenden Information zugeordnet ist, umfasst, wobei der Inhalt des ID-Feldes unabhängig davon ist, ob von dem ersten Steuergerät an das zweite Steuergerät gesendet wird oder umgekehrt. In vorteilhafter Ausgestaltung der Erfindung umfasst das Protokoll keine (darüber hinausgehende) Adressinformation zur Adressierung des ersten oder des zweiten Steuergerätes.

Vorgenannte Aufgabe wird zudem - insbesondere in Verbindung mit vorgenannten vorteilhaften Ausgestaltungen - durch ein Steuerungsmodul zur Steuerung einer Funktion eines Kraftfahrzeuges und/oder zur, insbesondere optischen und/oder akustischen, Ausgabe einer den Betrieb des Kraftfahrzeuges betreffenden Information gelöst, wobei das Steuerungsmodul eine Schnittstelle zur Eingabe und/oder Ausgabe der den Betrieb des Kraftfahrzeuges betreffenden Information umfasst, wobei über die Schnittstelle, insbesondere nur, mittels eines Protokolls kommunizierbar ist, das ein Operationsfeld zur Identifikation einer mittels der den Betrieb des Kraftfahrzeuges betreffenden Information auszuführenden Aufgabe umfasst.

Vorgenannte Aufgabe wird zudem - insbesondere in Verbindung mit vorgenannten vorteilhaften Ausgestaltungen - durch ein Steuerungsmodul zur Steuerung einer Funktion eines Kraftfahrzeuges und/oder zur, insbesondere optischen und/oder akustischen, Ausgabe einer den Betrieb des Kraftfahrzeuges betreffenden Information geiöst, wobei das Steuerungsmodul eine Schnittstelle zur Eingabe und Ausgabe der den Betrieb des Kraftfahrzeuges betreffenden Information umfasst, wobei über die Schnittstelle, insbesondere nur, mittels eines Protokolls kommunizierbar ist, das ein ID-Feld zur Identifikation einer Funktion, die der den Betrieb des Kraftfahrzeuges betreffenden Information zugeordnet ist, umfasst, wobei der Inhalt des ID-Feldes unabhängig davon ist, ob die Information von dem Steuerungsmodul empfangen oder gesendet wird. In vorteilhafter Ausgestaltung der Erfindung umfasst das Protokoll keine (darüber hinausgehende) Adressinformation zur Adressierung des Steuerungsmoduls oder eines Kommunikationspartners.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel für ein Kraftfahrzeug,
- Fig. 2: ein Ausführungsbeispiel für ein Kommunikationssystem,
- Fig. 3: ein Ausführungsbeispiel für ein Schnittstellenprotokoll,
- Fig. 4: ein Ausführungsbeispiel für eine mittels einer Eingabevorrichtung dargestellten Grundmaske,
- Fig. 5: einen beispielhaften Informationsfluss,
- Fig. 6: einen beispielhaften Informationsfluss,
- Fig. 7: ein Ausführungsbeispiel für eine Maske zur Bedienung einer Klimaanlage.
- Fig. 8: ein Ausführungsbeispiel für ein Überwachungsmodul,

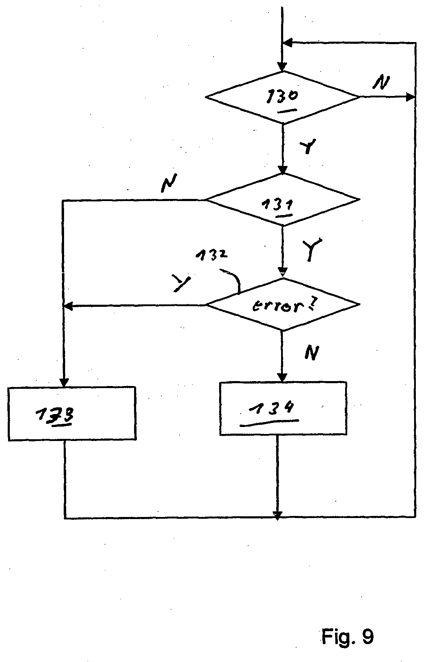

- Fig. 9: ein Ausführungsbeispiel für einen in einem Schnittstellenmodul implementierten Ablauf,
- Fig. 10: einen beispielhaften Informationsfluss,
- Fig. 11: einen beispielhaften Informationsfluss,
- Fig. 12: einen beispielhaften Informationsfluss,
- Fig. 13: ein Ausführungsbeispiel für ein logisches Funktionssteuergerät,
- Fig. 14: ein Ausführungsbeispiel für Busprotokoll,
- Fig. 15: ein Ausführungsbeispiel für Busprotokoll, und
- Fig. 16: ein Ausführungsbeispiel für ein logisches Ausgabesteuergerät.

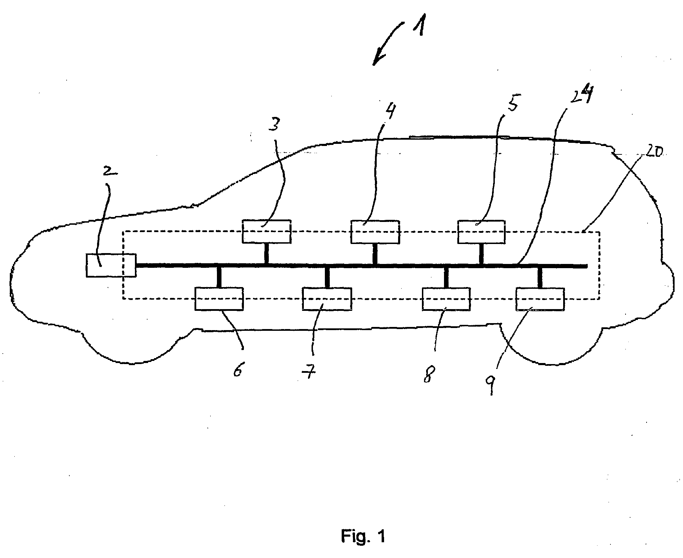

Fig. 1 zeigt ein Ausführungsbeispiel für ein Kraftfahrzeug 1 in einer schematisierten Ansicht. Das Kraftfahrzeug 1 weist eine Motorsteuerung 2, eine Kombianzeige 3 zur Anzeige von Geschwindigkeit, Motordrehzahl, Kühlwassertemperatur u.ä., eine Multifunktionsanzeigevorrichtung 4 mit einem Touchscreen zur Bedienung einer Klimaanlage 6, eines Navigationssystems 7, eines Musikmoduls 8 und eines Telefonmoduls 9 sowie eine akustische Ausgabevorrichtung 5 auf. Die Motorsteuerung 2, die Kombianzeige 3, die Multifunktionsanzeigevorrichtung 4, die Ausgabevorrichtung 5, die Klimaanlage 6, das Navigationssystem 7, das Musikmodul 8 und/oder das Telefonmodul 9 sind zum Austausch von Daten bzw. Informationen über ein Bussystem 24 als Bestandteil eines Kommunikationssystems 20 verbunden. Die Klimaanlage 6, das Navigationssystem 7, das Musikmodul 8 und das Telefonmodul 9 können - wie in Fig. 1 dargestellt - je auf einer separaten Hardware implementiert sein. Sie können jedoch auch alle oder zum Teil auf einer gemeinsamen Hardware implementiert sein.

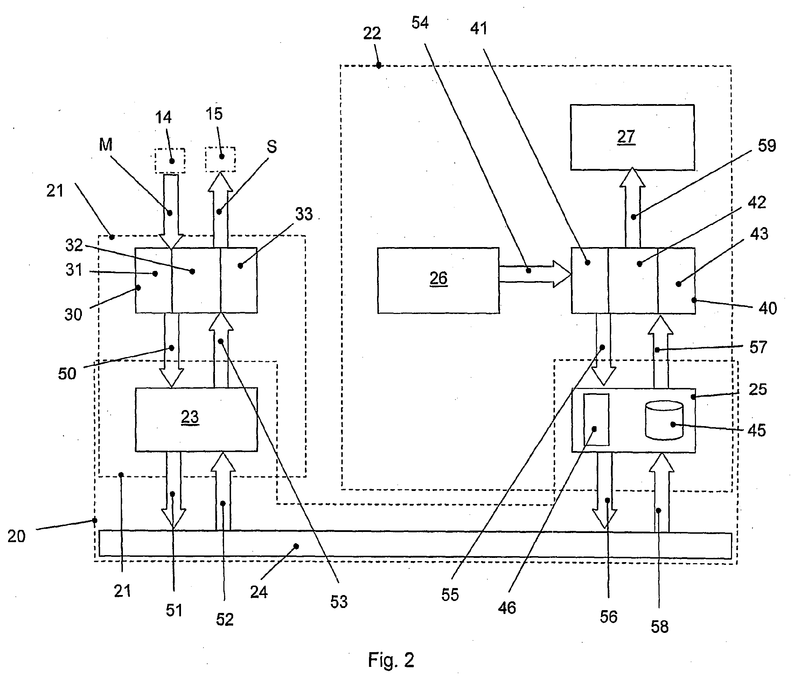

Fig. 2 zeigt eine detaillierte Ausgestaltung des Kommunikationssystems 20 und dessen Zusammenwirken mit einzelnen Steuergeräten 21 und 22. Dabei bezeichnet Bezugszeichen 21 eine Funktionssteuerung zur Erzeugung oder Bereitstellung einer den Betrieb des Kraftfahrzeuges 1 betreffenden Information und Bezugszeichen 22 eine von einer Funktionssteuerung 21 räumlich getrennte Ausgabesteuerung. Die den Betrieb des Kraftfahrzeuges betreffende Information kann z.B. eine Motordrehzahl, ein Öldruck, eine Kühlmitteltemperatur, eine Fahrzeugneigung, ein Abstand zu einem Hindernis, eine Innenraumtemperatur, ein im Empfangsbereich des Kraftfahrzeuges 1 liegender Radiosender, der geographische Ort des Kraftfahrzeuges 1, ein Schließzustand von Türen, eine aktuelle Uhrzeit, ein Telefonbucheintrag, ein Steuerbefehl zur Bewegung eines Aktors 15 und/oder ein ausgewählter Musiktitel sein. Die Funktionssteuerung 21 kann der Motorsteuerung 2, der Klimaanlage 6, dem Navigationssystem 7, dem Musikmodul 8 und/oder dem Telefonmodul 9 entsprechen. Die Ausgabesteuerung 22 kann der Kombianzeige 3, der Multifunktionsanzeigevorrichtung 4 und/oder (bei entsprechenden Abwandlungen) der akustischen Ausgabevorrichtung 5 entsprechen. Die den Betrieb des Kraftfahrzeuges betreffende Information ist mittels des Kommunikationssystems 20 bzw. physikalisch mittels des Bussystems 24 von der Funktionssteuerung 21 an die Ausgabesteuerung 22 übertragbar.

Die Funktionssteuerung 21 umfasst ein Funktionsbausteine 31, 32, 33 aufweisendes logisches Funktionssteuergerät 30 zur Steuerung von Funktionen des Kraftfahrzeuges 1, z.B. mittels der Steuerung bzw. Regelung von Aktoren 15 durch Erzeugung von Steuersignalen S und durch Einlesen von von Sensoren 14 erzeugten Messignalen M. Ein solches Steuersignal S kann ein einer Soll-Temperatur entsprechendes elektrisches Signal für eine Kühlvorrichtung sein. Ein Messsignal M kann ein einer gemessenen Ist-Temperatur entsprechendes elektrisches Signal sein. Eine derartige Ist-Temperatur kann eine den Betrieb des Kraftfahrzeuges 1 betreffende Information in Sinne der Ansprüche sein. Aber auch eine vorgenannte Soll-Temperatur kann eine den Betrieb des Kraftfahrzeuges 1 betreffende Information in Sinne der Ansprüche sein. Das Funktionssteuerungsteil 30 dient damit der eigentlichen Erzeugung bzw. Bereitstellung der den Betrieb des Kraftfahrzeuges 1 betreffenden Information.

Das logische Funktionssteuergerät 30 ist ein Ausführungsbeispiel für eine der den Betrieb des Kraftfahrzeuges betreffenden Information zugeordnete Funktion im Sinne der Ansprüche. Die Funktionssteuerung 21 kann auch mehrere logische Funktionssteuergeräte umfassen. Ein logisches Funktionssteuergerät 30 kann z.B. die eigentliche Funktionalität der Motorsteuerung 2, der Klimaanlage 6, des Navigationssystems 7, des Musikmodus 8 und/oder des Telefonmoduls 9 sein.

Die Ausgabesteuerung 22 umfasst ein Display 27 zur optischen Darstellung einer den Betrieb des Kraftfahrzeuges betreffenden Information, wie z.B. der Motordrehzahl, dem Öldruck, der Kühlmitteltemperatur, der Fahrzeugneigung, einem Abstand zu einem Hindernis, einer Innenraumtemperatur, eines im Empfangsbereich des Kraftfahrzeuges 1 liegenden Radiosenders, des geographischen Ortes des Kraftfahrzeuges 1, einem Schließzustand von Türen, der aktuellen Uhrzeit, eines Telefonbucheintrags und/oder des ausgewählten Musiktitels. Zur Ansteuerung des Displays 27 umfasst die Ausgabesteuerung 22 ein Funktionsbausteine 41, 42, 43 aufweisendes logisches Ausgabesteuergerät 40, wobei von dem logischen Ausgabesteuergerät 40 ein Displaysteuerungssignal 59 ausgegeben wird.

Die Ausgabesteuerung 22 umfasst im vorliegenden Ausführungsbeispiel zudem eine Eingabevorrichtung 26 zur Eingabe einer Anforderung zur optischen Darstellung einer den Betrieb des Kraftfahrzeuges 1 betreffenden Information und zur Ausgabe eines entsprechenden Anforderungssignals 54. Die Eingabevorrichtung 26 kann - wie im vorliegenden Ausführungsbeispiel - Bestandteil der Ausgabesteuerung 22 sein. Die Eingabevorrichtung 26 kann aber auch z.B. neben dem Display 27 angeordnete Bedienelemente umfassen. Die Eingabevorrichtung 26 kann auch einen auf dem Display 27 angeordneten Touchscreen umfassen. Die Eingabevorrichtung 26 kann zudem räumlich von der Ausgabesteuerung 22 angeordnet und dieser lediglich zugeordnet sein.

Das logische Ausgabesteuergerät 40 ist ein Ausführungsbeispiel für eine der den Betrieb des Kraftfahrzeuges betreffenden Information zugeordnete Funktion im Sinne der Ansprüche. Die Ausgabesteuerung 22 kann auch mehre logische Ausgabesteuergeräte umfassen. Ein logisches Ausgabesteuergerät 40 kann z.B. die eigentliche rechentechnische Funktionalität der Kombianzeige 3, der Multifunktionsanzeigevorrichtung 4 und/oder (bei entsprechender Abwandlung) der akustischen Ausgabevorrichtung 5 sein.

Das Kommunikationssystem 20 umfasst ein Schnittstellenmodul 23 zur Übersetzung einer von dem logischen Funktionssteuergerät 30 ausgegebenen Information 50 in eine Information 51 im Übertragungsformat des Bussystems 24 und/oder zur Übersetzung einer Information 52 im Übertragungsformat des Bussystems 24 in eine von dem logischen Funktionssteuergerät 30 einlesbare Information 53. Das Kommunikationssystem 20 umfasst zudem ein Schnittstellenmodul 25 zur Übersetzung einer von dem logischen Ausgabesteuergerät 40 ausgegebenen Information 55 in eine Information 56 im Übertragungsformat des Bussystems 24 und/oder zur Übersetzung einer Information 58 im Übertragungsformat des Bussystems 24 in eine von dem logischen Funktionssteuergerät 30 einlesbare Information 57.

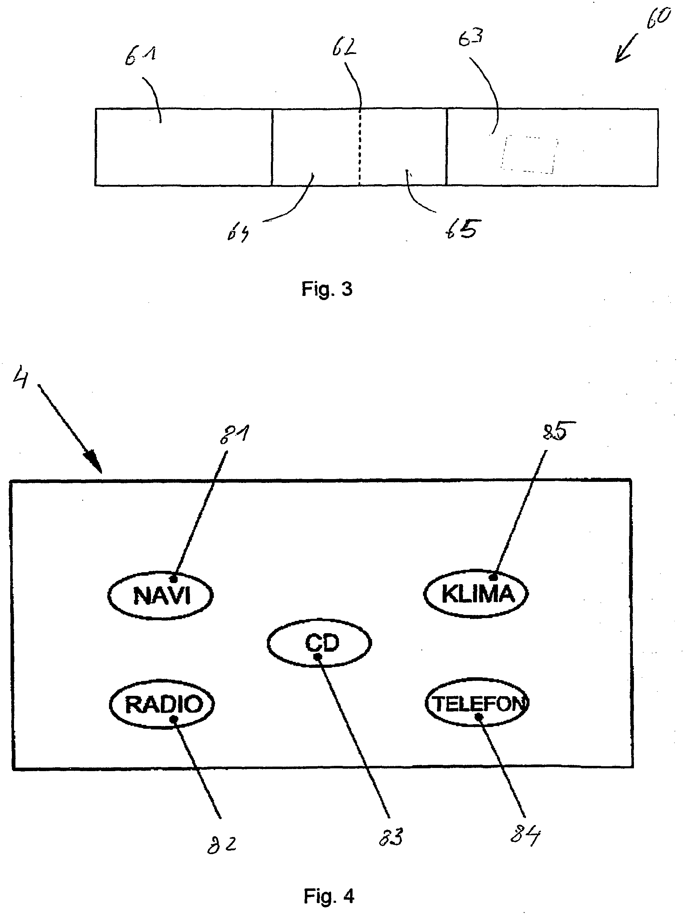

Die Übertragung der Informationen 50, 53, 55 und 57 erfolgt gemäß einem in Fig. 3 dargestellten Schnittstellenprotokoll 60. Das Schnittstellenprotokoll 60 setzt sich aus einem Operationsfeld 61 zur Identifikation einer (ggf. mit der den Betrieb des Kraftfahrzeuges betreffenden Information) auszuführenden Aufgabe, einem ID-Feld 62 zur Bezeichnung des logischen Steuergerätes 21 oder 22, dem die der den Betrieb des Kraftfahrzeuges betreffende Information zugeordnet ist, und zur Identifikation der den Betrieb des Kraftfahrzeuges betreffenden Information und einem Datenfeld 63 mit einem Wert für die den Betrieb des Kraftfahrzeuges betreffende Information zusammen. Es kann vorgesehen sein, dass das Datenfeld 63 abhängig vom Inhalt des Operationsfeldes leer sein bzw. weggelassen werden kann. Das ID-Feld 62 umfasst einen ersten Bereich 64 zur Bezeichnung des logischen Steuergerätes 21 oder 22, dem die der den Betrieb des Kraftfahrzeuges betreffende Information zugeordnet ist, und einen zweiten Bereich 65 zur Identifikation der den Betrieb des Kraftfahrzeuges betreffenden Information.

Im vorliegenden Ausführungsbeispiel umfasst das Operationsfeld 61 3 Bit, das ID-Feld 62 zwei Mal 6 Bit (6 Bit pro Bereich) und das Datenfeld 63 bis zu 28656 Bit.

Eine Identifikation der den Betrieb des Kraftfahrzeuges betreffenden Information und insbesondere eine Identifikation der den Betrieb des Kraftfahrzeuges betreffenden Information im Sinne der Ansprüche kann eine Bezeichnung wie z.B. 'Außentemperatur' oder eine Bezeichnung eines Funktionsmoduls 31, 32, 33, 41, 42, 43, in dem die den Betrieb des Kraftfahrzeuges betreffenden Information 'verarbeitet' wird, umfassen. Werden mehrere den Betrieb des Kraftfahrzeuges betreffende Informationen in einem Funktionsmodul 31, 32, 33, 41, 42 bzw. 43 'verarbeitet', so kann diese den Betrieb des Kraftfahrzeuges betreffende Informationen in einem Array zusammengefasst und grundsätzlich zusammen übertragen werden.

Das Schnittstellenprotokoll 60 ist von der Ausgestaltung des Bussystems 24 unabhängig. So kann das Bussystem 24 ein CAN-Bussystem, ein MOST-Bussystem, einLIN-Bussystem o.ä. sein. Das Schnittstellenprotokoll 60 ist von einer solchen konkreten Ausgestaltung unberührt.

Das Operationsfeld 61 kann als zulässigen Eintrag z.B.
- eine Anforderung zur Übersendung eines aktuellen Wertes der den Betrieb des Kraftfahrzeuges betreffenden Information,
- eine Aufforderung zur Änderung der den Betrieb des Kraftfahrzeuges betreffenden Information,
- eine Aufforderung zur Bestätigung einer Änderung der den Betrieb des Kraftfahrzeuges betreffenden Information,
- eine Kennzeichnung der Übersendung eines aktuellen Wertes der den Betrieb des Kraftfahrzeuges betreffenden Information,
- eine Kennzeichnung eines Neustartes einer der den Betrieb des Kraftfahrzeuges betreffenden Information zugeordneten Funktion und/oder
- eine Kennzeichnung eines der den Betrieb des Kraftfahrzeuges betreffenden Information zuzuordnenden Fehlers
umfassen.

Im vorliegenden Ausführungsbeispiel sind für das Operationsfeld 61 als zulässige Einträge die Requests DataSetGet_REQ, DataSet_REQ, DataGet_REQ, Start_REQ, StartResult_REQ, AbortResult_REQ, Data_CNF, Processing_REQ, Result_REQ, Changed_REQ und Error_REQ und die Indications DataSetGet_IND, DataSet_IND, Data-Get_IND, Start_IND, StartResult_IND, AbortResult_IND, Data_RSP, Processing_IND, Result_IND, Changed_IND, Reset_ND und Error_IND vorgesehen. Dabei bezeichnet ein Request eine ausgehende Nachricht und Indication ein eingehende Nachricht.

Mit dem Request DataSetGet_REQ (Sender: logischer Ausgabesteuergerät 40) werden dem adressierten logischen Funktionssteuergerät 30 und dem Funktionsmodul 31, 32, 33 neue (Soll-) Werte übergeben. Mit diesem Request können Werte verändert werden, also neue Werte gesetzt werden. Es werden immer Daten zum betreffenden Steuergerät über das Bussystem 24 übertragen. Das logische Funktionssteuergerät 30 liefert die aktuellen Werte zurück

Mit dem Request DataSet_REQ (Sender: logisches Ausgabesteuergerät 40) werden dem adressierten logischen Funktionssteuergerät 30 und dem Funktionsmodul 31, 32, 33 neue (Soll-) Werte übergeben. Mit diesem Request können Werte verändert werden, also neue Werte gesetzt werden. Es werden immer Daten zum betreffenden Steuergerät über das Bussystem 24 übertragen. Das logische Funktionssteuergerät 30 liefert aber keine aktuellen Informationen (im Sinne einer Antwort) zurück.

Mit dem Request DataGet_REQ (Sender: logisches Ausgabesteuergerät 40) werden vom adressierten logischen Funktionssteuergerät 30 und dem Funktionsmodul 31, 32, 33 die aktuellen Werte gelesen. Es werden immer Daten vom betreffenden Steuergerät über das Bussystem 24 übertragen.

Mit dem Request Start_REQ (Sender: logisches Ausgabesteuergerät 40) werden dem adressierten logischen Funktionssteuergerät 30 und dem Funktionsmodul 31, 32, 33 mitgeteilt, dass eine bestimmte Bewegung des Aktors 15 ausgeführt werden soll. Optional können Parameter übergeben werden. Es werden immer Daten zum betreffenden Steuergerät über das Bussystem 24 übertragen.

Der Request StartResult_REQ (Sender: logisches Ausgabesteuergerät 40) verhält sich wie der Request Start_REQ, mit dem Unterschied dass bei dieser Bewegung des Aktors 15 ein Ergebnis erwartet wird. Das Ergebnis wird vom logischen Ausgabesteuergerät 40 zeitlich überwacht und kann vom logischen Funktionssteuergerät 30 mit Processing_REQ verlängert werden.

Wenn eine Bewegung des Aktors 15 abgebrochen werden soll, kann mit dem Request AbortResult_REQ (Sender: logisches Ausgabesteuergerät 40) diese Information einem logischen Funktionssteuergerät 30 übertragen werden. Das Ergebnis wird von dem logischen Ausgabesteuergerät 40 zeitlich überwacht und kann vom logischen Funktionssteuergerät 30 mit Processing_REQ verlängert werden.

Mit dem Request Data_CNF (Sender: logisches Funktionssteuergerät 30) antwortet das adressierte Funktionssteuergerät 30 und sendet die angeforderten Daten dem logischen Ausgabesteuergerät 40 zurück.

Mit dem Request Processing_REQ (Sender: logisches Funktionssteuergerät 30) kann das Funktionssteuergerät 30 dem logischen Ausgabesteuergerät 40 mitteilen, das die angeforderte Aktion noch in Bearbeitung ist. Dem Request ist ein Parameter (StartResult / AbortResult) mitzugeben, damit der Empfänger zwischen StartResult und AbortResult unterscheiden kann.

Mit dem Request Result_REQ (Sender: logisches Funktionssteuergerät 30) teilt das Funktionssteuergerät 30 dem logischen Ausgabesteuergerät 40 das Ergebnis der angeforderten Aktion mit.

Mit dem Request Changed_REQ (Sender: logisches Funktionssteuergerät 30) teilt das Funktionssteuergerät 30 dem logischen Ausgabesteuergerät 40 mit, dass sich in einem Array Einträge geändert haben.

Mit dem Request Error_REQ (Sender: logisches Funktionssteuergerät 30) kann ein Funktionssteuergerät 30 seinen Fehlerzustand bzw. Fehlerwert dem logischen Ausgabesteuergerät 40. mitteilen.

Mit der Indication DataSetGet_IND (Empfänger: logisches Funktionssteuergerät 30) wird dem logischen Funktionssteuergerät 30 angezeigt, dass die adressierten Datenwerte verändert werden sollen und dass eine Antwort mit den aktuellen Werten angefordert wurde.

Mit der Indication DataSet_IND (Empfänger: logisches Funktionssteuergerät 30) wird dem logischen Funktionssteuergerät 30 angezeigt, dass die adressierten Datenwerte verändert werden sollen und dass keine Antwort mit den aktuellen Werten angefordert wurde.

Mit der Indication DataGet_IND (Empfänger: logisches Funktionssteuergerät 30) wird dem logischen Funktionssteuergerät 30 angezeigt, dass die adressierten Datenwerte vom logischen Ausgabesteuergerät 40 angefordert werden. Das Funktionssteuergerät 30 hat mit einem Data_CNF zu antworten.

Mit der Indication Start_IND (Empfänger: logisches Funktionssteuergerät 30) wird dem logischen Funktionssteuergerät 30 signalisiert, dass die adressierte Bewegung des Aktors 15 gestartet werden soll.

Mit der Indication StartResult_IND (Empfänger: logisches Funktionssteuergerät 30) wird dem logischen Funktionssteuergerät 30 signalisiert, dass die adressierte Bewegung des Aktors 15 gestartet werden soll. Wenn die Bewegung des Aktors 15 nicht sofort ein Ergebnis liefert, ist mit Processing_REQ (sonst mit Result_REQ) zu antworten.

Mit der Indication AbortResult_IND (Empfänger: logisches Funktionssteuergerät 30) wird dem logischen Funktionssteuergerät 30 signalisiert, dass die adressierte Bewegung des Aktors 15 abgebrochen werden soll. Das Ergebnis ist mit dem Request Result_REQ an das logische Ausgabesteuergerät 40 zu liefern.

Mit der Indication Data_RSP (Empfänger: logisches Ausgabesteuergerät 40) wird im logischen Ausgabesteuergerät 40 das Ergebnis einer Datenanforderung durch einen DataGet_REQ oder DataSetGet_REQ signalisiert.

Mit der Indication Processing_IND (Empfänger: logisches Ausgabesteuergerät 40) wird dem logischen Ausgabesteuergerät 40 signalisiert, dass die adressierte Bewegung des Aktors 15 gestartet wurde, das Ergebnis aber noch nicht vorliegt und in Bearbeitung ist.

Mit der Indication Result_IND (Empfänger: logisches Ausgabesteuergerät 40) wird dem logischen Ausgabesteuergerät 40 signalisiert, dass die adressierte Bewegung des Aktors 15 ausgeführt wurde und das Ergebnis dieser Aktion hiermit mitgeteilt wird.

Mit der Indication Changed_IND (Empfänger: logisches Ausgabesteuergerät 40) wird dem logischen Ausgabesteuergerät 40 signalisiert, dass sich im adressierten Array Einträge geändert haben.

Mit der Indication Reset_IND (Empfänger: logisches Ausgabesteuergerät 40) wird dem logischen Ausgabesteuergerät 40 signalisiert, dass das adressierte Steuergerät neu gestartet wird oder sich zurückgesetzt (reset) hat. Die angezeigten Daten sind damit ungültig und die dieses Steuergerät betreffenden Daten des Informationsspeichers 45 sind auf entsprechende Defaultwerte zu setzen.

Mit der Indication Error_IND (Empfänger: logisches Ausgabesteuergerät 40) wird ein Fehlerfall des logischen Funktionssteuergerätes 30 signalisiert.

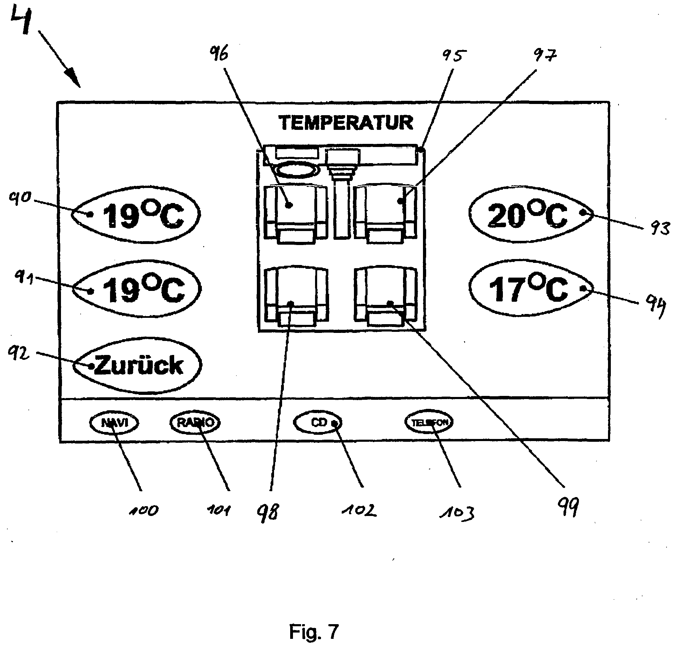

Ein einfaches Bespiel für den Informationsaustausch zwischen dem logischen Funktionssteuergerät 30 und dem logischen Ausgabesteuergerät 40 ist mit Bezugname auf, Fig. 4, Fig. 5, Fig. 6 und Fig. 7 am Beispiel eines Zusammenwirkens zwischen der Klimaanlage 6 als Ausgestaltung des beispielhaften logischen Funktionssteuergerätes 30 und der Multifunktionsanzeigevorrichtung 4, die im in dem Fig. 4 und Fig. 7 zugrunde liegenden Ausführungsbeispiel einen auf einem Display angeordneten Touchscreen umfasst, die eine beispielhafte Ausgestaltung des logischen Ausgabesteuergerätes 40 darstellt, erläutert.

In Fig. 4 ist die Multifunktionsanzeigevorrichtung 4 in einem eine Grund-Maske anzeigenden Zustand dargestellt. Dabei zeigt die Multifunktionsanzeigevorrichtung 4 fünf durch Ellipsen ausgeführte Bedienelemente 81, 82, 83, 84 und 85 an. Durch Berühren bzw. Drücken des Bedienelementes 81 in Fig. 4 wird eine Maske zur Bedienung des Navigationssystems aufgerufen, durch Berühren bzw. Drücken des Bedienelementes 82 in Fig. 4 wird eine Maske zur Bedienung eines Radios (als Teil des Musikmoduls 8) aufgerufen, durch Berühren bzw. Drücken des Bedienelementes 83 in Fig. 4 wird eine Maske zur Bedienung eines CD-Spielers (als Teil des Musikmoduls 8) aufgerufen und durch Berühren bzw. Drücken des Bedienelementes 84 in Fig. 4. wird eine Maske zur Bedienung des Telefonmoduls 9 aufgerufen

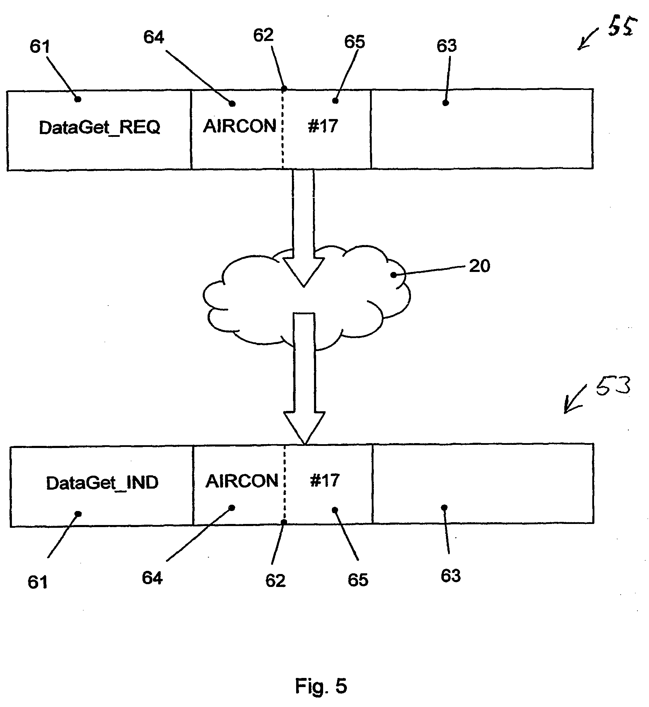

Durch Berühren bzw. Drücken des Bedienelementes 85 in Fig. 4 wird eine in Fig. 7 dargestellte Maske zur Bedienung der Klimaanlage 6 aufgerufen. Dazu sendet ein auf der Multifunktionsanzeigevorrichtung 4 implementiertes logisches Ausgabesteuergerät 'Anzeigesteuerung' - wie in Fig. 5 dargestellt - eine Information 55 in dem gemäß in Fig. 3 erläuterten Schnittstellenprotokoll 60. Dabei enthält das Operationsfeld 61 den Eintrag DataGet_REQ als Aufforderung, die im ID-Feld 62 spezifizierte Information zu übersenden. Das ID-Feld 62 enthält einen Eintrag AIRCON, der ein auf der Klimaanlage 6 implementiertes logisches Funktionssteuergerät 'Klimaautomatik' als 'Besitzer' der Information benennt. Zudem enthält das ID-Feld 62 einen Eintrag #17, der die Soll-Temperatur im Innenraum des Kraftfahrzeuges 1 im Bereich des Fahrzeugführersitzes bezeichnet. Das Datenfeld 63 ist leer bzw. weggelassen. Die Information 55 wird als Information 53 von dem logischen Funktionssteuergerät 'Klimaautomatik' empfangen. Dabei enthält das Operationsfeld 61 einen Eintrag DataGet_IND als Aufforderung, die im ID-Feld 62 spezifizierte Information zu übersenden. DataGet_IND und DataGet_REQ können den gleichen Code besitzen und damit nicht voneinander unterscheidbar sein.

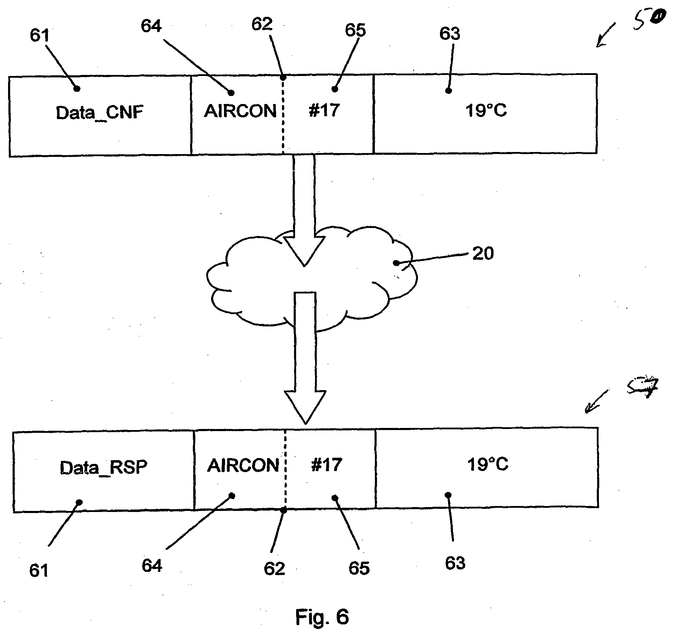

Als Reaktion wird von dem logischen Funktionssteuergerät 'Klimaautomatik' die in Fig. 6 dargestellte Information 50 in dem gemäß in Fig. 3 erläuterten Schnittstellenprotokoll 60 gesendet. Dabei enthält das Operationsfeld 61 einen Eintrag Data_CNF, der die Information 50 als Information zur Datenübermittlung kennzeichnet. Das ID-Feld 62 enthält den Eintrag AIRCON, der ein auf der Klimaanlage 6 implementiertes logisches Steuergerät 'Klimaautomatik' als "Besitzer" der Information benennt. Zudem enthält das ID-Feld 62 den Eintrag #17, der die Soll-Temperatur im Innenraum des Kraftfahrzeuges 1 im Bereich des Fahrzeugführersitzes bezeichnet. Das Datenfeld 63 enthält den Wert '19°C' als eingestellten Wert für die Soll-Temperatur im Innenraum des Kraftfahrzeuges 1. Die mittels des Kommunikationssystems 20 übertragene Information 50 wird als Information 57 von der Multifunktionsanzeigevorrichtung 4 empfangen. Dabei erkennt das logische Ausgabesteuergerät 'Anzeigesteuerung' aufgrund des Wissens um eine erwartete Nachricht, des Eintrags Data_RSP im Operationsfeld 61 und den Einträgen 'AIRCON' und #17, dass es sich um eine für das logische Ausgabesteuergerät 'Anzeigesteuerung' bestimmte Nachricht und zwar um die erwartete Antwort handelt.

Nach Erhalt aller anzuzeigenden Temperaturangaben zeigt die Multifunktionsanzeigevorrichtung 4 die in Fig. 7 dargestellte Maske mit in Bedienelementen 90, 91, 92, 93 und 94 dargestellten Temperaturangaben der einzelnen Orte im Fahrzeuginneren, wobei die Temperaturangaben sich auf aktuell eingestellte Temperaturen beziehen, die über die Bedienelemente 90, 91, 93 und 94 verändert werden können.

Die Darstellung gemäß Fig. 7 mit der Überschrift 'TEMPERATUR' und der Anzeige des Innenraumes 95 des Kraftfahrzeuges 1 macht deutlich, dass die Temperatur im Fahrzeuginneren individuell und sitzplatzbezogen einstellbar ist. Das Bedienelement 90 zeigt für den vorderen Fahrzeugführersitz 96 an, dass eine Soll-Temperatur von 19°C eingestellt ist. Das Bedienelement 93 zeigt für den vorderen Beifahrersitz 97 an, dass eine Soll-Temperatur von 20°C eingestellt ist. Für die Fondsitze 98 und 99 sind auf der linken Seite eine Soll-Temperatur von 19°C und auf der rechten Seite eine Soll-Temperatur von 17 °C eingestellt. Das Bedienelement 92 hat eine Zuweisung, d. h. eine Funktionszuweisung, die mit "Zurück" (auf die nächst höhere Menüdarstellung, also im vorliegenden Fall auf die Maske gemäß Fig. 4) dargestellt ist.

In der Darstellung gemäß Fig. 7 zeigt die Multifunktionsanzeigevorrichtung 4 den Bedienelementen 81, 82, 83 und 84 entsprechende Bedienelemente 100, 101, 102 und 103 an.

Das Schnittstellenmodul 25 gemäß Fig. 2 kann in optionaler Ausgestaltung einen Informationsspeicher 45 zur Speicherung einer oder mehrerer den Betrieb des Kraftfahrzeuges 1 betreffenden Informationen umfassen. Diese den Betrieb des Kraftfahrzeuges 1 betreffenden Informationen werden von der Funktionssteuerung 21 an die Ausgabesteuerung 22 übertragen, wobei - im fehlerfreien Betrieb - eine Übertragung immer dann erfolgt, wenn sich eine entsprechende den Betrieb des Kraftfahrzeuges betreffende Information verändert hat, oder wenn seit der letzten Übertragung eine vorbestimmte Wiederholzeit verstrichen ist. Die Wiederholzeit kann für unterschiedliche den Betrieb des Kraftfahrzeuges betreffende Informationen unterschiedlich sein. Die Wiederholzeit beträgt insbesondere mehr als 1 s.

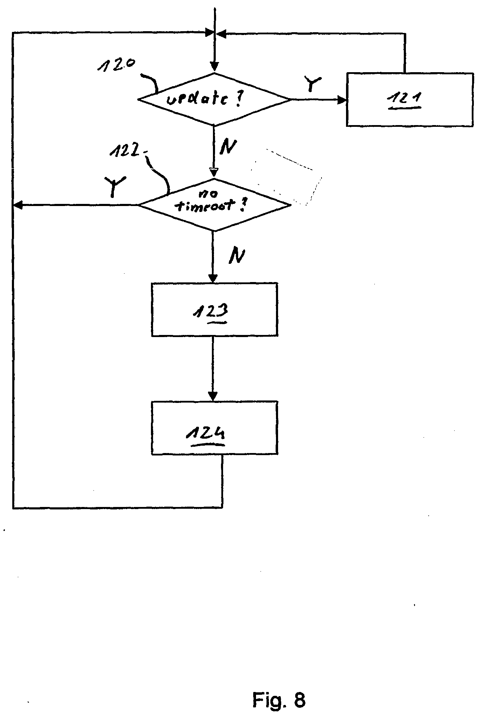

Das Schnittstellenmodul 25 umfasst ein - mit Bezugnahme auf Fig. 8 in Form eines beispielhaften Ablaufs näher erläutertes - Überwachungsmodul 46 zur Überwachung vorgenannter Übertragung der den Betrieb des Kraftfahrzeuges betreffenden Informationen. Der in Fig. 8 dargestellte beispielhafte Ablauf beginnt mit einer Abfrage 120, ob ein neuer Wert für eine zu überwachende den Betrieb des Kraftfahrzeuges 1 betreffende Information empfangen worden ist.

Ist kein neuer Wert für eine zu überwachende den Betrieb des Kraftfahrzeuges 1 betreffende Information empfangen worden, so folgt der Abfrage 120 eine Abfrage 122, ob die zu überwachende den Betrieb des Kraftfahrzeuges betreffende Information das letzte Mal innerhalb einer Karenzzeit von der Funktionssteuerung 21 an die Ausgabesteuerung 22 übertragen worden ist, wobei die Karenzzeit gleich oder länger ist als die Wiederholzeit. Die Karenzzeit kann z.B. das Doppelte oder Dreifache der Wiederholzeit betragen.

Ist die zu überwachende den Betrieb des Kraftfahrzeuges betreffende Information das letzte Mal innerhalb der Karenzzeit von der Funktionssteuerung 21 an die Ausgabesteuerung 22 übertragen worden, so folgt der Abfrage 122 die Anfrage 120. Ist dagegen die zu überwachende den Betrieb des Kraftfahrzeuges betreffende Information das letzte Mal nicht (mehr) innerhalb der Karenzzeit von der Funktionssteuerung 21 an die Ausgabesteuerung 22 übertragen worden, so folgt der Abfrage 122 ein Schritt 123, in dem eine Speicherfehlervariable auf einen Wert ERROR gesetzt wird. Dem Schritt 123 folgt ein Schritt 124, in dem von der Ausgabesteuerung 22 eine Aufforderung zur Übertragung der zu überwachenden den Betrieb des Kraftfahrzeuges betreffenden Information an die Funktionssteuerung 21 gesendet wird. Dem Schritt 124 folgt die Abfrage 120.

Ergibt die Abfrage 120, dass ein neuer Wert für eine zu überwachende den Betrieb des Kraftfahrzeuges betreffende Information empfangen worden ist, so folgt der Abfrage 120 ein Schritt 121, in dem die Speicherfehlervariable auf einen Wert NOERROR gesetzt wird.

Erfolgt mittels der Eingabevorrichtung 26 gemäß Fig. 2 eine Anforderung zur optischen Darstellung einer bestimmten den Betrieb des Kraftfahrzeuges betreffenden Information, so fordert das Ausgabesteuerungsteil 40 mittels einer Anforderung 55 gemäß Schnittstellenprotokoll 60 vom dem Schnittstellenmodul 25 diese den Betrieb des Kraftfahrzeuges betreffende Information an. In dem Schnittstellenmodul 25 ist ein im folgenden mit Bezugnahme auf Fig. 7 erläuterter Ablauf implementiert. Dieser beginnt mit einer (zyklischen) Abfrage 130, ob eine von dem Ausgabesteuerungsteil 40 gesendete Information 55 erhalten worden ist. Ist dies der Fall, so folgt der Abfrage 130 eine Abfrage 131, andernfalls erfolgt erneut die Abfrage 130.

Mittels der Abfrage 131 wird abgefragt, ob die angeforderte den Betrieb des Kraftfahrzeuges betreffende Information eine in dem Informationsspeicher 45 gespeicherte Information ist. Ist die angeforderte den Betrieb des Kraftfahrzeuges betreffende Information keine in dem Informationsspeicher 45 gespeicherte Information, so folgt der Abfrage 131 ein Schritt 133, in dem die die angeforderte den Betrieb des Kraftfahrzeuges betreffende Information von der Funktionssteuerung 21 angefragt wird. Anschließend folgt dem Schritt 133 die Abfrage 130. Sobald die angeforderte den Betrieb des Kraftfahrzeuges betreffende Information von der Funktionssteuerung 21 gesendet und von dem Schnittstellenmodul 25 empfangen worden ist, wird diese dem Ausgabesteuerungsteil 40 bereit gestellt.

Ist die angeforderte den Betrieb des Kraftfahrzeuges betreffende Information eine in dem Informationsspeicher 45 gespeicherte Information, so folgt der Abfrage 131 eine Abfrage 132, ob die Speicherfehlervariable auf den Wert ERROR gesetzt ist. Ist die Speicherfehlervariable auf den Wert ERROR gesetzt, so folgt der Abfrage 132 der Schritt 133. Ist die Speicherfehlervariable dagegen nicht auf den Wert ERROR gesetzt, so folgt der Abfrage 132 ein Schritt 134, in dem die angeforderte den Betrieb des Kraftfahrzeuges betreffende Information aus dem Informationsspeicher 45 ausgelesen und dem Ausgabesteuerungsteil 40 bereit gestellt wird. Dem Schritt 134 folgt die Abfrage 130.

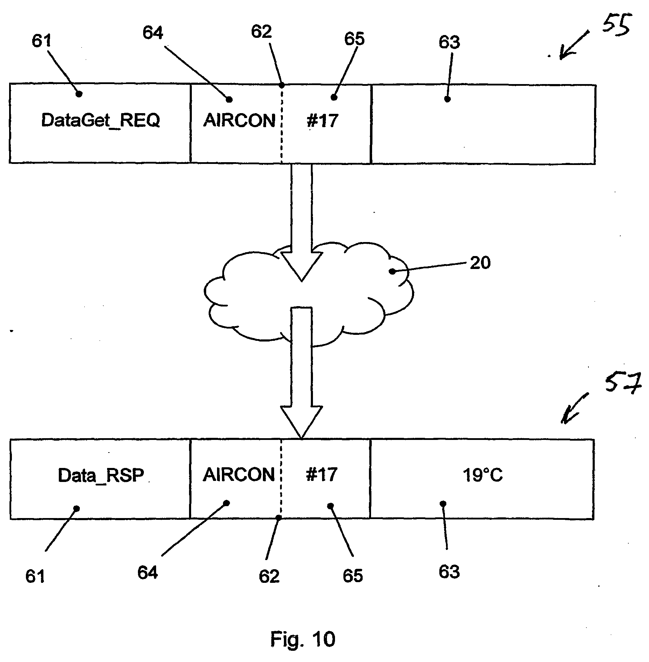

Im vorliegenden Ausführungsbeispiel sei ein Informationsspeicher 45 vorgesehen. Zudem sei vorgesehen, dass die in Fig. 7 dargestellten Soll-Temperaturen im Informationsspeicher 45 gespeichert sind. In diesem Fall wird der in Fig. 5 und Fig. 6 dargestellte Informationsfluss durch den in Fig. 10 dargestellten Informationsfluss ersetzt. Ausgelöst durch das Berühren bzw. Drücken des Bedienelementes 85 in Fig. 4 wird eine Information 55 in dem gemäß in Fig. 3 erläuterten Schnittstellenprotokoll 60 ausgesendet, wobei das Operationsfeld 61 den Eintrag DataGet_REQ und das ID-Feld 62 die Einträge AIRCON und #17 enthält, und wobei das Datenfeld 63 leer bzw. weggelassen ist. Das logische Funktionssteuergerät 'Klimaautomatik' erhält im Gegensatz zur Ausgestaltung gemäß Fig. 5 keine entsprechende Information. Vielmehr wird die Information 57 mittels des Kommunikationssystems 20 auf der Grundlage der entsprechenden Daten im Informationsspeicher 45 erzeugt und an das logische Ausgabesteuergerät ,Anzeigesteuerung' übergeben.

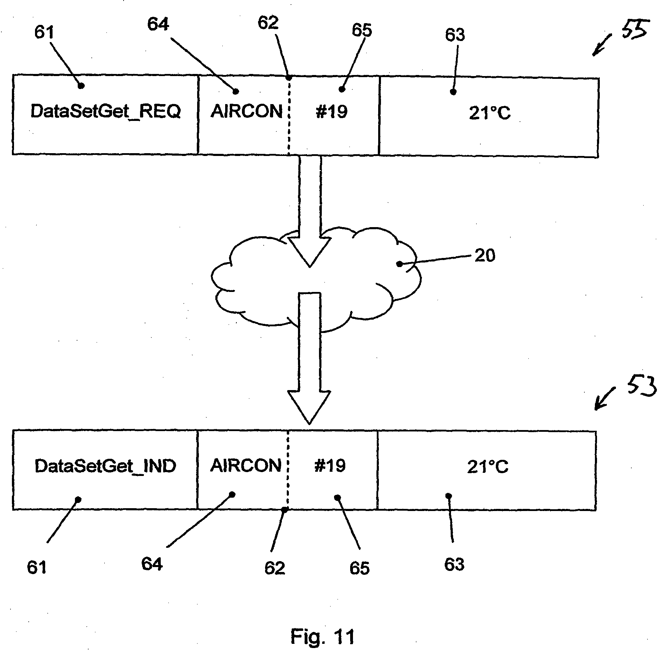

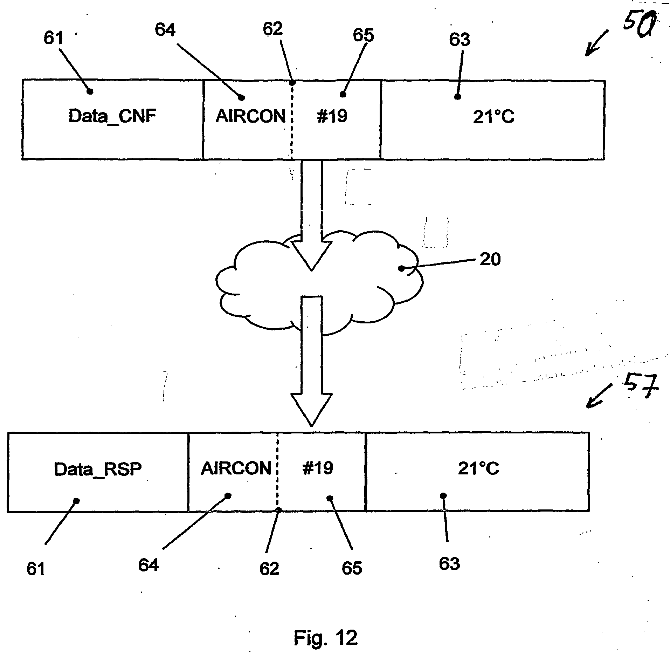

Ob das Kommunikationssystem 20 auf Daten aus dem Informationsspeicher 45 zurückgreift oder einen Request an das entsprechende logische Funktionssteuergerät 30 sendet ist abhängig von dem Inhalt des Operationsfeldes 61. Ist z.B. Inhalt des Operationsfeldes 61 DataSetGet_REQ, so wird der entsprechende Request an das entsprechende logische Funktionssteuergerät 30 übertragen und nicht auf Werte aus dem Informationsspeicher 45 zurückgegriffen. Fig. 11 und Fig. 12 zeigen einen entsprechenden beispielhaften Informationsfluss.

Durch Berühren bzw. Drücken des Bedienelementes 93 in Fig. 7 wird eine nicht dargestellte Maske zur Veränderung der Soll-Temperatur für den Beifahrersitz 97 aufgerufen. Wird die Soll-Temperatur für den Beifahrersitz 97 z.B. auf 21°C erhöht, so sendet das logische Ausgabesteuergerät 'Anzeigesteuerung' - wie in Fig. 11 dargestellt - eine Information 55 in dem gemäß in Fig. 3 erläuterten Schnittstellenprotokoll 60.

Dabei enthält das Operationsfeld 61 den Eintrag DataSetGet_REQ als Aufforderung, die im ID-Feld 62 durch die Einträge AIRCON und #19 spezifizierte Soll-Temperatur für den Beifahrersitz 97 auf den im Datenfeld 63 bezeichneten Wert 21 °C zu setzten und den neuen Wert der Soll-Temperatur als Bestätigung zu übersenden. Die Information 55 wird als Information 53 von dem logischen Funktionssteuergerät 'Klimaautomatik' empfangen. Dabei enthält das Operationsfeld 61 einen Eintrag DataSetGet_IND als Aufforderung, die im ID-Feld 62 durch die Einträge AIRCON und #19 spezifizierte Soll-Temperatur für den Beifahrersitz 97 auf den im Datenfeld 63 bezeichneten Wert 21 °C zu setzen und den neuen Wert der Soll-Temperatur als Bestätigung zu übersenden. DataSetGet_IND und DataSetGet_REQ können den gleichen Code besitzen und damit nicht voneinander unterscheidbar sein.

Als Reaktion wird von dem logischen Funktionssteuergerät 'Klimaautomatik', das sich als 'zuständiges' logisches Steuergerät identifiziert, die in Fig. 6 dargestellte Information 50 in dem gemäß in Fig. 3 erläuterten Schnittstellenprotokoll 60 gesendet. Dabei enthält das Operationsfeld 61 einen Eintrag Data_CNF, der die Information 50 als Information zur Datenübermittlung kennzeichnet. Das ID-Feld 62 enthält die Einträge AIRCON und #19. Das Datenfeld 63 enthält den Wert ,21 °C' als neuen eingestellten Wert für die Soll-Temperatur. Die mittels des Kommunikationssystems 20 übertragene Information 50 wird als Information 57 von der Multifunktionsanzeigevorrichtung 4 empfangen. Dabei erkennt das logische Ausgabesteuergerät 'Anzeigesteuerung' aufgrund des Wissens um eine erwartete Nachricht, des Eintrags Data_RSP im Operationsfeld 61 und den Einträgen 'AIRCON' und #19, dass es sich um eine für das logische Ausgabesteuergerät ,Anzeigesteuerung' bestimmte Nachricht und zwar um die erwartete Antwort handelt. Nach Erhalt der Information 57 zeigt die Multifunktionsanzeigevorrichtung 4 die in Fig. 7 dargestellte Maske jedoch mit der neuen Temperaturangabe 21 °C im Bedienelement 93 an.

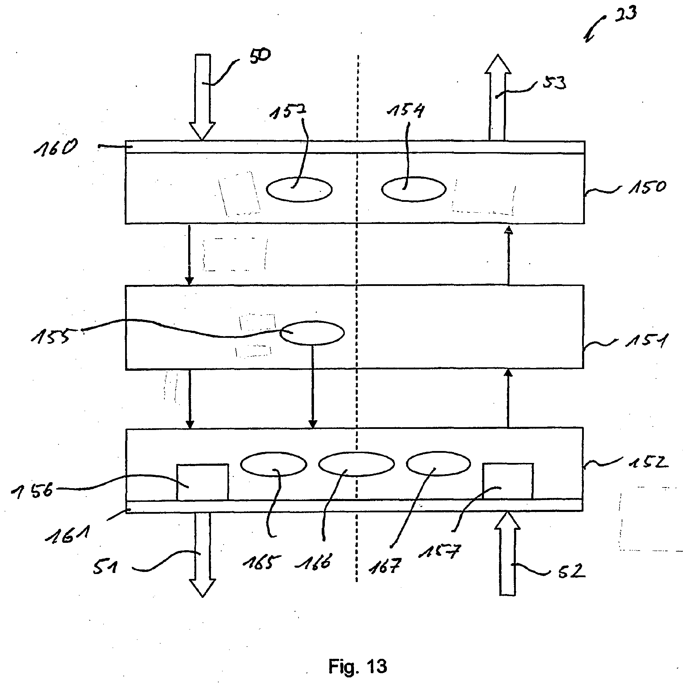

Fig. 13 zeigt ein Ausführungsbeispiel für das Schnittstellenmodul 23. Das Schnittstellenmodul 23 ist in drei Schichten, eine BAL-Schicht 150, eine BPL-Schicht 151 und eine BCL-Schicht 152 unterteilt. Die BAL-Schicht 150 umfasst die Schnittstelle 160 zum logischen Funktionssteuergerät 30. Die BAL-Schicht 150 umfasst zudem ein Übersetzungsmodul 153 zur Übersetzung des Operationsfeldes 61 der Information 50 und ein Übersetzungsmodul 154 zur Übersetzung des Operationsfeldes 61 der Information 53. Die BPL-Schicht 151 umfasst eine Heartbeatfunktion 155 zur periodischen Ausgabe derjenigen den Betrieb des Kraftfahrzeuges 1 betreffenden Informationen, die dem logischen Funktionssteuergerät 30 zugeordnet sind und die in dem Informationsspeicher 45 abzuspeichern sind.

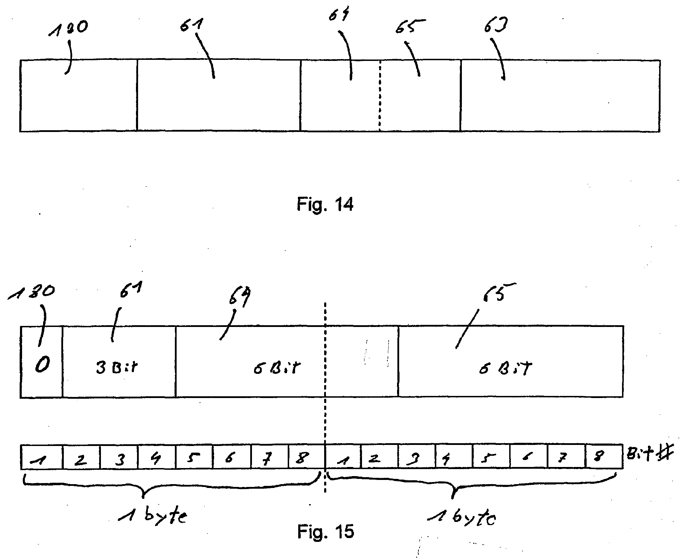

Die BCL-Schicht 152 umfasst ein Header-Coding-Modul 165 zur Ergänzung der dem Protokoll 60 entsprechenden Information 50 um einen in Fig. 14 dargestellten Header 180 gemäß einem Protokoll zur Kommunikation über das Bussystem 24. Die BCL-Schicht 152 umfasst zudem einen Sendepuffer 156 zur Segmentierung der um den Header 180 ergänzten Information 50 in die Information 51 mittels eines Segmentierungsmoduls 166. Die BCL-Schicht 152 umfasst weiterhin eine Busschnittstelle 161 zur Ausgabe der Information 51. Fig. 15 zeigt ein Beispiel für die Segmentierung einer einfachen Information ohne ein Datenfeld. Die in Fig. 15 dargestellte Information umfasst einen 1 Bit langen Header 180 mit dem Inhalt ,0', ein 3 Bit langes Operationsfeld 61, einen 6 Bit langen Bereich 64 und einen 6 Bit langen Bereich 65. Die 16 Bit Information wird in zwei Segmente ä 1 Byte unterteilt über das Bussystem 24 übertragen, wobei die Trennung der zwei Segmente im Bereich 64 liegt. Die BCL-Schicht 152 umfasst zudem einen Empfangspuffer 157 zur Aneinanderreihung von eingehenden Informationen 52 sowie ein Header-Decoding-Modul 167 zur Reduktion eines Headers 180 von zusammengesetzten Informationen 52.

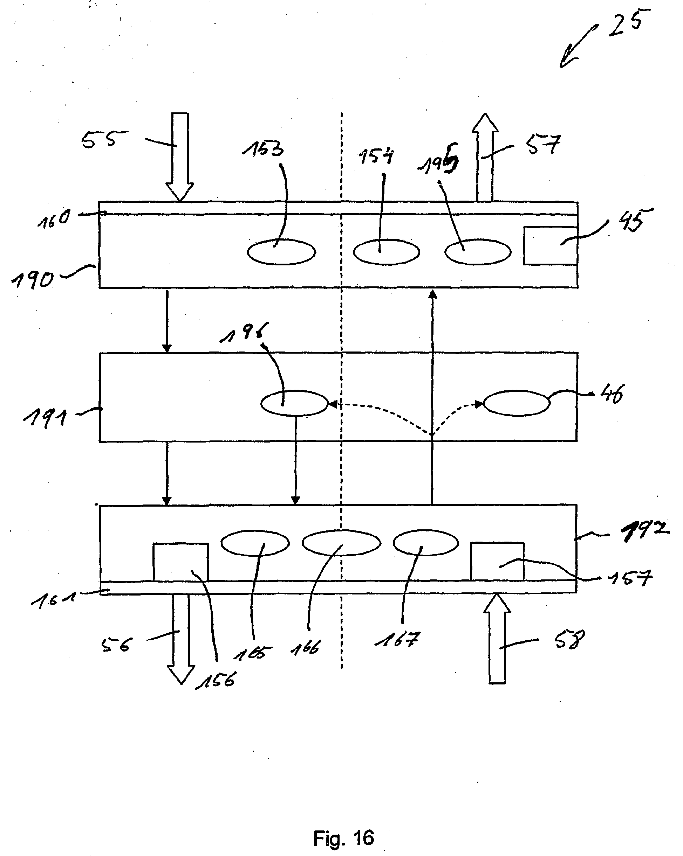

Fig. 16 zeigt ein Ausführungsbeispiel für das Schnittstellenmodul 25, wobei gleiche Bezugszeichen wie in Fig. 13 gleiche oder gleichartige Elemente bezeichnen. Das Schnittstellenmodul 25 ist in drei Schichten, eine BAL-Schicht 190, eine BPL-Schicht 191 und eine der BCL-Schicht 152 entsprechende BCL-Schicht 192 unterteilt. Die BAL-Schicht 190 umfasst die Schnittstelle 160 zum logischen Ausgabesteuergerät 40 sowie ein Versionsabgleichsmodul 195. Die BAL-Schicht 190 umfasst zudem ein Übersetzungsmodul 153 zur Übersetzung des Operationsfeldes 61 der Information 55 und ein Übersetzungsmodul 154 zur Übersetzung des Operationsfeldes 61 der Information 58. Die BAL-Schicht 190 umfasst zudem den Informationsspeicher 45. Die BPL-Schicht 191 umfasst einen Retry-Timer 196 zur erneuten Anforderung von Informationen von einem Funktionssteuergerät 30, wenn nicht innerhalb einer Antwortzeit eine Antwort von dem Funktionssteuergerät 30 empfangen worden ist. Die BPL-Schicht 191 umfasst zudem das Überwachungsmodul 46.

Die Elemente und Felder in den Figuren sind unter Berücksichtigung von Einfachheit und Klarheit und nicht notwendigerweise maßstabsgetreu gezeichnet. So sind z.B. die Größenordnungen einiger Elemente bzw. Felder übertrieben gegenüber anderen Elementen bzw. Feldern dargestellt, um das Verständnis der Ausführungsbeispiele der vorliegenden Erfindung zu verbessern.

### BEZUGSZEICHENLISTE

- 1: Kraftfahrzeug
- 2: Motorsteuerung
- 3: Kombianzeige
- 4: Multifunktionsanzeigevorrichtung
- 5: akustische Ausgabevorrichtung
- 6: Klimaanlage
- 7: Navigationssystem
- 8: Musikmodul
- 9: Telefonmodul
- 24: Bussystem
- 14: Sensor
- 15: Aktor
- 20: Kommunikationssystem
- 21: Funktionssteuerung
- 22: Ausgabesteuerung
- 23,25: Schnittstellenmodul
- 26: Eingabevorrichtung
- 27: Display
- 30: logisches Funktionssteuerungsgerät
- 31, 32, 33, 41, 42, 43: Funktionsbaustein
- 40: logisches Ausgabesteuerungsgerät
- 45: Informationsspeicher
- 46: Überwachungsmodul
- 50, 51, 52, 53, 55, 56, 57, 58: Information
- 54: Anforderungssignal
- 59: Displaysteuerungssignal
- 60: Protokoll
- 61: Operationsfeld
- 62: ID-Feld
- 63: Datenfeld
- 64, 65: Bereich
- 81, 82, 83, 84, 85,90,91,92, 93,94,100,101, 102,103,: Bedienelement
- 95: Anzeige eines Innenraumes eines Kraftfahrzeuges
- 96: Fahrzeugführersitz
- 97: Beifahrersitz
- 98,99: Fondsitz
- 120, 122, 130, 131, 132: Abfrage
- 121, 123, 124, 133, 134: Schritt
- 150, 190: BAL-Schicht
- 151, 191: BPL-Schicht
- 152, 192: BCL-Schicht
- 153, 154: Übersetzungsmodul
- 155: Heartbeatfunktion
- 156: Sendepuffer
- 157: Empfangspuffer
- 160: Schnittelle zur Funktionssteuerung bzw. zur Ausgabesteuerung
- 161: Busschnittstelle
- 165: Header-Coding-Modul
- 166: Segmentierungsmodul
- 167: Header-Decoding-Modul
- 180: Header
- 195: Versionsabgleichsmodul
- 196: Retry-Timer

- M: Messsignal
- S: Steuersignal

## Patentansprüche

1. Kommunikationssystem (20) für ein Kraftfahrzeug (1) zur Übertragung einer den Betrieb des Kraftfahrzeuges (1) betreffenden Information von einem sendenden Steuergerät zu einem empfangenden Steuergerät, wobei das Kommunikationssystem (20) eine Schnittstelle (160) zur Eingabe oder Ausgabe der den Betrieb des Kraftfahrzeuges (1) betreffenden Information umfasst, wobei über die Schnittstelle (160) mittels eines Protokolls (60) kommunizierbar ist, das ein Operationsfeld (61) zur Identifikation einer mittels der den Betrieb des Kraftfahrzeuges (1) betreffenden Information auszuführenden Aufgabe umfasst, **dadurch gekennzeichnet, dass** das Protokoll (60) keine Bezeichnung des empfangenden Steuergerätes umfasst.

2. Kommunikationssystem (20) nach Anspruch 1, **dadurch gekennzeichnet, dass** das Protokoll (60) ein Datenfeld (63) mit einem Wert für die den Betrieb des Kraftfahrzeuges (1) betreffende Information umfasst.

3. Kommunikationssystem (20) nach Anspruch 1 oder 2, **dadurch gekennzeichnet, dass** das Protokoll (60) ein ID-Feld (62) zur Identifikation der den Betrieb des Kraftfahrzeuges (1) betreffenden Information umfasst.

4. Kommunikationssystem (20) nach Anspruch 1, 2 oder 3, **dadurch gekennzeichnet, dass** das Protokoll (60) höchstens das Operationsfeld (61), das Datenfeld (63) und das ID-Feld (62) umfasst.

5. Kommunikationssystem (20) nach Anspruch 1, 2, 3 oder 4, **dadurch gekennzeichnet, dass** das Operationsfeld (61) eine Information umfasst, die angibt, ob sich das Protokoll (60) auf eine zu sendende oder eine empfangene Nachricht bezieht.

6. Kommunikationssystem (20) nach Anspruch 1, 2 oder 3, **dadurch gekennzeichnet, dass** das Protokoll (60) ein Informationsfeld zur Kennzeichnung einer zu sendenden oder einer empfangenen Nachricht umfasst.

7. Kommunikationssystem (20) nach Anspruch 6, **dadurch gekennzeichnet, dass** das Protokoll (60) höchstens das Operationsfeld (61), das Datenfeld (63), das ID-Feld (62) und das Informationsfeld umfasst.

8. Kommunikationssystem (20) nach einem der Ansprüche 3 bis 7, **dadurch gekennzeichnet, dass** das ID-Feld (62) eine Funktion bezeichnet, die der den Betrieb des Kraftfahrzeuges (1) betreffenden Information zugeordnet ist oder von der die den Betrieb des Kraftfahrzeuges (1) betreffende Information erzeugt oder verarbeitet wird.

9. Kommunikationssystem (20) nach einem der vorhergehenden Ansprüche, **dadurch gekennzeichnet, dass** das Protokoll (60) keine Bezeichnung des sendenden Steuergerätes umfasst.

10. Steuerungsmodul zur Steuerung einer Funktion eines Kraftfahrzeuges (1) und/oder zur, insbesondere optischen oder akustischen, Ausgabe einer den Betrieb des Kraftfahrzeuges (1) betreffenden Information, wobei das Steuerungsmodul auf einem Steuergerät implementiert ist, wobei das Steuerungsmodul eine Schnittstelle (160) zur Eingabe oder Ausgabe der den Betrieb des Kraftfahrzeuges (1) betreffenden Information umfasst, wobei über die Schnittstelle (160) mittels eines Protokolls (60) kommunizierbar ist, das ein Operationsfeld (61) zur Identifikation einer mittels der den Betrieb des Kraftfahrzeuges (1) betreffenden Information auszuführenden Aufgabe umfasst, **dadurch gekennzeichnet, dass** das Protokoll (60) keine Bezeichnung des Steuergerätes umfasst.

11. Steuerungsmodul nach Anspruch 10, **dadurch gekennzeichnet, dass** das Protokoll (60) ein Datenfeld (63) mit einem Wert für die den Betrieb des Kraftfahrzeuges (1) betreffende Information umfasst.

12. Steuerungsmodul nach Anspruch 10 oder 11, **dadurch gekennzeichnet, dass** das Protokoll (60) ein ID-Feld (62) zur Identifikation der den Betrieb des Kraftfahrzeuges (1) betreffenden Information umfasst.

13. Steuerungsmodul nach Anspruch 10, 11 oder 12, **dadurch gekennzeichnet, dass** das Operationsfeld (61) eine Information umfasst, die angibt, ob sich das Protokoll (60) auf eine zu sendende oder eine empfangene Nachricht bezieht.

14. Steuerungsmodul nach Anspruch 10, 11 oder 12, **dadurch gekennzeichnet, dass** das Protokoll (60) ein Informationsfeld zur Kennzeichnung einer zu sendenden oder einer empfangenen Nachricht umfasst.

15. Steuerungsmodul nach einem der Ansprüche 12 bis 14, **dadurch gekennzeichnet, dass** das ID-Feld (62) eine Funktion bezeichnet, der die den Betrieb des Kraftfahrzeuges (1) betreffenden Information zugeordnet ist oder von der die den Betrieb des Kraftfahrzeuges (1) betreffende Information erzeugt oder verarbeitet wird.

16. Kraftfahrzeug (1), **dadurch gekennzeichnet, dass** es ein Kommunikationssystem (20) nach einem der Ansprüche 1 bis 9 aufweist.

17. Kraftfahrzeug (1) nach Anspruch 16, **dadurch gekennzeichnet, dass** es ein Steuerungsmodul nach einem der Ansprüche 10 bis 15 aufweist.

18. Kraftfahrzeug (1), **dadurch gekennzeichnet, dass** es ein Steuerungsmodul nach einem der Ansprüche 10 bis 15 aufweist.

19. Verfahren zum Betrieb eines Kommunikationssystems (20) für ein Kraftfahrzeug (1) zur Übertragung einer den Betrieb des Kraftfahrzeuges (1) betreffenden Information von einem sendenden Steuergerät zu einem empfangenden Steuergerät, wobei das Kommunikationssystem (20) eine Schnittstelle (160) zur Eingabe oder Ausgabe der den Betrieb des Kraftfahrzeuges (1) betreffenden Information umfasst, wobei über die Schnittstelle (160) mittels eines Protokolls (60) kommuniziert wird, das ein Operationsfeld (61) zur Identifikation einer mittels der den Betrieb des Kraftfahrzeuges (1) betreffenden Information auszuführenden Aufgabe umfasst, **dadurch gekennzeichnet, dass** das Protokoll (60) keine Bezeichnung des empfangenden Steuergerätes umfasst.

20. Verfahren (20) nach Anspruch 19, **dadurch gekennzeichnet, dass** das Protokoll (60) ein Datenfeld (63) mit einem Wert für die den Betrieb des Kraftfahrzeuges (1) betreffende Information umfasst.

21. Verfahren (20) nach Anspruch 19 oder 20, **dadurch gekennzeichnet, dass** das Protokoll (60) ein ID-Feld (62) zur Identifikation der den Betrieb des Kraftfahrzeuges (1) betreffenden Information umfasst.

22. Kommunikationssystem (20) nach Anspruch 19, 20 oder 21, **dadurch gekennzeichnet, dass** das Protokoll (60) höchstens das Operationsfeld (61), das Datenfeld (63) und das ID-Feld (62) umfasst.

23. Verfahren (20) nach Anspruch 19, 20, 21 oder 22, **dadurch gekennzeichnet, dass** das Operationsfeld (61) eine Information umfasst, die angibt, ob sich das Protokoll (60) auf eine zu sendende oder eine empfangene Nachricht bezieht.

24. Verfahren (20) nach Anspruch 1, 2 oder 3, **dadurch gekennzeichnet, dass** das Protokoll (60) ein Informationsfeld zur Kennzeichnung einer zu sendenden oder einer empfangenen Nachricht umfasst.

25. Verfahren (20) nach Anspruch 24, **dadurch gekennzeichnet, dass** das Protokoll (60) höchstens das Operationsfeld (61), das Datenfeld (63), das ID-Feld (62) und das Informationsfeld umfasst.

26. Verfahren (20) nach einem der Ansprüche 21 bis 25, **dadurch gekennzeichnet, dass** das ID-Feld (62) eine Funktion bezeichnet, die der den Betrieb des Kraftfahrzeuges (1) betreffenden Information zugeordnet ist oder von der die den Betrieb des Kraftfahrzeuges (1) betreffende Information erzeugt oder verarbeitet wird.

27. Verfahren (20) nach einem der Ansprüche 19 bis 26, **dadurch gekennzeichnet, dass** das Protokoll (60) keine Bezeichnung des sendenden Steuergerätes umfasst.

28. Verfahren zum Betrieb eines Steuerungsmoduls zur Steuerung einer Funktion eines Kraftfahrzeuges (1) und/oder zur, insbesondere optischen oder akustischen, Ausgabe einer den Betrieb des Kraftfahrzeuges (1) betreffenden Information, wobei das Steuerungsmodul auf einem Steuergerät implementiert ist, wobei das Steuerungsmodul eine Schnittstelle (160) zur Eingabe oder Ausgabe der den Betrieb des Kraftfahrzeuges (1) betreffenden Information umfasst, wobei über die Schnittstelle (160) mittels eines Protokolls (60) kommuniziert wird, das ein Operationsfeld (61) zur Identifikation einer mittels der den Betrieb des Kraftfahrzeuges (1) betreffenden Information auszuführenden Aufgabe umfasst, **dadurch gekennzeichnet, dass** das Protokoll (60) keine Bezeichnung des Steuergerätes umfasst.

29. Verfahren nach Anspruch 28, **dadurch gekennzeichnet, dass** das Protokoll (60) ein Datenfeld (63) mit einem Wert für die den Betrieb des Kraftfahrzeuges (1) betreffende Information umfasst.

30. Verfahren nach Anspruch 28 oder 29, **dadurch gekennzeichnet, dass** das Protokoll (60) ein ID-Feld (62) zur Identifikation der den Betrieb des Kraftfahrzeuges (1) betreffenden Information umfasst.

31. Verfahren nach Anspruch 28, 29 oder 30, **dadurch gekennzeichnet, dass** das Operationsfeld (61) eine Information umfasst, die angibt, ob sich das Protokoll (60) auf eine zu sendende oder eine empfangene Nachricht bezieht.

32. Verfahren nach Anspruch 28, 29 oder 30, **dadurch gekennzeichnet, dass** das Protokoll (60) ein Informationsfeld zur Kennzeichnung einer zu sendenden oder einer empfangenen Nachricht umfasst.

33. Verfahren nach einem der Ansprüche 30 bis 32, **dadurch gekennzeichnet, dass** das ID-Feld (62) eine Funktion bezeichnet, der die den Betrieb des Kraftfahrzeuges (1) betreffenden Information zugeordnet ist oder von der die den Betrieb des Kraftfahrzeuges (1) betreffende Information erzeugt oder verarbeitet wird.

## Claims

1. Communications system (20) for a motor vehicle (1) for the transmission of information relating to the operation of the vehicle (1) from a transmitting control device to a receiving control device, the communications system (20) comprising an interface (160) for the input or output of information relating to the operation of the motor vehicle (1), wherein communication is possible via the interface (160) by means of a protocol (60) which comprises an operation field (61) for identifying a task to be performed by means of the information relating to operation of the vehicle (1), **characterised in that** the protocol (60) does not indicate the receiving control device.

2. Communications system (20) according to claim 1, **characterised in that** the protocol (60) comprises a data field (63) with a value for the information relating to the operation of the vehicle (1).

3. Communications system (20) according to either claim 1 or claim 2, **characterised in that** the protocol (60) comprises an ID field (62) for identifying the information relating to the operation of the vehicle (1).

4. Communications system (20) according to claim 1, 2 or 3, **characterised in that** the protocol (60) comprises at most the operation field (61), the data field (63) and the ID field (62).

5. Communications system (20) according to claim 1, 2, 3 or 4, **characterised in that** the operation field (61) comprises information which indicates whether the protocol (60) relates to a message to be sent or a received message.

6. Communications system (20) according to claim 1, 2 or 3, **characterised in that** the protocol (60) comprises an information field for indicating a message to be sent or a received message.

7. Communications system (20) according to claim 6, **characterised in that** the protocol (60) comprises at most the operation field (61), the data field (63), the ID field (62) and the information field.

8. Communications system (20) according to any one of claims 3 to 7, **characterised in that** the ID field (62) identifies a function which is assigned to the information relating to operation of the vehicle (1) or by which the information relating to operation of the vehicle (1) is produced or processed.

9. Communications system (20) according to any one of the preceding claims, **characterised in that** the protocol (60) does not identify the sending control device.

10. Control module for controlling a function of a motor vehicle (1) and/or especially for the optical and/or acoustic output of information relating to operation of the vehicle (1), the control module being implemented on a control device, the control module comprising an interface (160) for the input or output of information relating to the operation of the vehicle (1), wherein communication is possible via the interface (160) by means of a protocol (60) which comprises an operation field (61) for identifying a task to be performed by means of the information relating to the operation of the vehicle (1), **characterised in that** the protocol (60) does not identify the control device.

11. Control module according to claim 10, **characterised in that** the protocol (60) comprises a data field (63) with a value for the information relating to the operation of the vehicle (1).

12. Control module according to either claim 10 or claim 11, **characterised in that** the protocol (60) comprises an ID field (62) for identifying the information relating to the operation of the vehicle (1).

13. Control module according to claim 10, 11 or 12, **characterised in that** the operation field (61) comprises information which indicates whether the protocol (60) relates to a message to be sent or a received message.

14. Control module according to claim 10, 11 or 12, **characterised in that** the protocol (60) comprises an information field for identifying a message to be sent or a received message.

15. Control module according to any one of claims 12 to 14, **characterised in that** the ID field (62) designates a function which is assigned to the information relating to the operation of the vehicle (1) or by which the information relating to the operation of the vehicle (1) is produced or processed.

16. Motor vehicle (1), **characterised in that** it comprises a communications system (20) according to any one of claims 1 to 9.

17. Motor vehicle (1) according to claim 16, **characterised in that** it comprises a control module according to any one of claims 10 to 15.

18. Motor vehicle (1), **characterised in that** it comprises a control module according to any one of claims 10 to 15.

19. Method for the operation of a communications system (20) for a motor vehicle (1) for the transmission of information relating to the operation of the vehicle (1) from a transmitting control device to a receiving control device, the communications system (20) comprising an interface (160) for the input or output of information relating to the operation of the motor vehicle (1), wherein communication is possible via the interface (160) by means of a protocol (60) which comprises an operation field (61) for identifying a task to be performed by means of the information relating to the operation of the vehicle (1), **characterised in that** the protocol (60) does not identify the receiving control device.

20. Method (20) according to claim 19, **characterised in that** the protocol (60) comprises a data field (63) with a value for the information relating to the operation of the vehicle (1).

21. Method (20) according to claim 19 or 20, **characterised in that** the protocol (60) comprises an ID field (62) for identifying information relating to the operation of the vehicle (1).

22. Communications system (20) according to claim 19, 20 or 21, **characterised in that** the protocol (60) comprises at most the operation field (61), the data field (63) and the ID field (62).

23. Method (20) according to claim 19, 20, 21 or 22, **characterised in that** the operation field (61) comprises information which indicates whether the protocol (60) relates to a message to be sent or a received message.

24. Method (20) according to claim 1, 2 or 3, **characterised in that** the protocol (60) comprises an information field for indicating a message to be sent or a received message.

25. Method (20) according to claim 24, **characterised in that** the protocol (60) comprises at most the operation field (61), the data field (63), the ID field (62) and the information field.

26. Method (20) according to any one of claims 21 to 25, **characterised in that** the ID field (62) designates a function which is assigned to the information relating to the operation of the vehicle (1) or by which the information relating to operation of the vehicle (1) is produced or processed.

27. Method (20) according to any one of claims 19 to 26, **characterised in that** the protocol (60) does not identify the sending control device.

28. Method for operating a control module for controlling a function of a motor vehicle (1) and/or especially for the optical and/or acoustic output of the information relating to the operation of the vehicle (1), the control module being implemented on a control device, the control module comprising an interface (160) for the input or output of the information relating to the operation of the vehicle (1), wherein communication is possible by way of an interface (160) by means of a protocol (60) which comprises an operation field (61) for identifying the task to be performed by means of the information relating to operation of the vehicle (1), **characterised in that** the protocol (60) does not identify the control device.

29. Method according to claim 28, **characterised in that** the protocol (60) comprises a data field (63) with a value for the information relating to the operation of the vehicle (1).

30. Method according to either claim 28 or claim 29, **characterised in that** the protocol (60) comprises an ID field (62) for identifying the information relating to the operation of the vehicle (1).

31. Method according to claim 28, 29 or 30, **characterised in that** the operation field (61) comprises information which indicates whether the protocol (60) relates to a message to be sent or a received message.

32. Control module according to claim 28, 29 or 30, **characterised in that** the protocol (60) comprises an information field for identifying a message to be sent or a received message.

33. Method according to any one of claims 30 to 32, **characterised in that** the ID field (62) designates a function which is assigned to the information relating to the operation of the vehicle (1) or by which the information relating to operation of the vehicle (1) is produced or processed.

## Revendications

1. Système de communication (20) pour un véhicule automobile (1) afin de transmettre une information concernant le fonctionnement du véhicule automobile (1) d'un appareil de commande émetteur à un appareil de commande récepteur, dans lequel le système de communication (20) comprend une interface (160) pour saisir ou délivrer l'information concernant le fonctionnement du véhicule automobile (1), dans lequel on peut communiquer via l'interface (160) au moyen d'un protocole (60), qui comprend un champ opérationnel (61) pour l'identification d'une tâche à exécuter au moyen de l'information concernant le fonctionnement du véhicule automobile (1), **caractérisé en ce que** le protocole (60) ne comprend pas de désignation de l'appareil de commande récepteur.

2. Système de communication (20) selon la revendication 1, **caractérisé en ce que** le protocole (60) comprend un champ de données (63) avec une valeur pour l'information concernant le fonctionnement du véhicule automobile (1).

3. Système de communication (20) selon la revendication 1 ou la revendication 2, **caractérisé en ce que** le protocole (60) est un champ d'identification (62) pour identifier l'information concernant le fonctionnement du véhicule automobile (1).

4. Système de communication (20) selon la revendication 1, 2 ou 3, **caractérisé en ce que** le protocole (60) comprend au maximum le champ opérationnel (61), le champ de données (63) et le champ d'identification (62).

5. Système de communication (20) selon la revendication 1, 2, 3 ou 4, **caractérisé en ce que** le champ opérationnel (61) comprend une information qui indique si le protocole (60) concerne un message à émettre ou un message reçu.

6. Système de communication (20) selon la revendication 1, 2 ou 3, **caractérisé en ce que** le protocole (60) comprend un champ d'information pour caractériser un message à émettre ou un message reçu.

7. Système de communication (20) selon la revendication 6, **caractérisé en ce que** le protocole (60) comprend au maximum le champ opérationnel (61), le champ de données (63), le champ d'identification (62) et le champ d'information.

8. Système de communication (20) selon l'une quelconque des revendications 3 à 7, **caractérisé en ce que** le champ d'identification (62) désigne une fonction qui est affectée à l'information concernant le fonctionnement du véhicule automobile (1) ou par laquelle l'information concernant le fonctionnement du véhicule automobile (1) est produite ou traitée.

9. Système de communication (20) selon l'une quelconque des revendications précédentes, **caractérisé en ce que** le protocole (60) ne comprend pas de désignation de l'appareil de commande émetteur.

10. Module de commande pour commander une fonction d'un véhicule automobile (1) et/ou pour délivrer, en particulier par voie optique ou acoustique, une information concernant le fonctionnement du véhicule automobile (1), dans lequel le module de commande est mis en oeuvre sur un appareil de commande, dans lequel le module de commande comprend une interface (160) pour saisir ou délivrer l'information concernant le fonctionnement du véhicule automobile (1), dans lequel on peut communiquer via l'interface (160) au moyen d'un protocole (60), qui comprend un champ opérationnel (61) pour identifier une tâche à exécuter au moyen de l'information concernant le fonctionnement du véhicule automobile (1), **caractérisé en ce que** le protocole (60) ne comprend pas de désignation de l'appareil de commande.

11. Module de commande selon la revendication 10, **caractérisé en ce que** le protocole (60) comprend un champ de données (63) avec une valeur pour l'information concernant le fonctionnement du véhicule automobile (1).

12. Module de commande selon la revendication 10 ou la revendication 11, **caractérisé en ce que** le protocole (60) comprend un champ d'identification (62) pour identifier l'information concernant le fonctionnement du véhicule automobile (1).

13. Module de commande selon la revendication 10, 11 ou 12, **caractérisé en ce que** le champ opérationnel (61) comprend une information qui indique si le protocole (60) se réfère à un message à émettre ou à un message reçu.

14. Module de commande selon la revendication 10, 11 ou 12, **caractérisé en ce que** le protocole (60) comprend un champ d'information pour caractériser un message à émettre ou un message reçu.

15. Module de commande selon l'une quelconque des revendications 12 à 14, **caractérisé en ce que** le champ d'identification (62) désigne une fonction qui est affectée à l'information concernant le fonctionnement du véhicule automobile (1) ou par laquelle l'information concernant le fonctionnement du véhicule automobile (1) est produite ou traitée.

16. Véhicule automobile (1), **caractérisé en ce qu'**il présente un système de communication (20) selon l'une quelconque des revendications 1 à 9.

17. Véhicule automobile (1) selon la revendication 16, **caractérisé en ce qu'**il présente un module de commande selon l'une quelconque des revendications 10 à 15.

18. Véhicule automobile (1), **caractérisé en ce qu'**il présente un module de commande selon l'une quelconque des revendications 10 à 15.

19. Procédé de fonctionnement d'un système de communication (20) pour un véhicule automobile (1) afin de transmettre une information concernant le fonctionnement du véhicule automobile (1) d'un appareil de commande émetteur à un appareil de commande récepteur, dans lequel le système de communication (20) comprend une interface (160) pour saisir ou délivrer l'information concernant le fonctionnement du véhicule automobile (1), dans lequel on communique via l'interface (160) au moyen d'un protocole (60) qui comprend un champ opérationnel (61) pour l'identification d'une tâche à exécuter au moyen de l'information concernant le fonctionnement du véhicule automobile (1), **caractérisé en ce que** le protocole (60) ne comprend pas de désignation de l'appareil de commande récepteur.

20. Procédé (20) selon la revendication 19, **caractérisé en ce que** le protocole (60) comprend un champ de données (63) avec une valeur pour l'information concernant le fonctionnement du véhicule automobile (1).

21. Procédé (20) selon la revendication 19 ou la revendication 20, **caractérisé en ce que** le protocole (60) comprend un champ d'identification (62) pour l'identification de l'information concernant le fonctionnement du véhicule automobile (1).

22. Système de communication (20) selon la revendication 19, 20 ou 21, **caractérisé en ce que** le protocole (60) comprend au maximum le champ opérationnel (61), le champ de données (63) et le champ d'identification (62).

23. Procédé (20) selon la revendication 19, 20, 21 ou 22, **caractérisé en ce que** le champ opérationnel (61) comprend une information qui indique si le protocole (60) se réfère à un message à émettre ou à un message reçu.

24. Procédé (20) selon la revendication 1, 2 ou 3, **caractérisé en ce que** le protocole (60) comprend un champ d'information pour caractériser un message à émettre ou un message reçu.

25. Procédé (20) selon la revendication 24, **caractérisé en ce que** le protocole (60) comprend au maximum le champ opérationnel (61), le champ de données (63), le champ d'identification (62) et le champ d'information.

26. Procédé (20) selon l'une quelconque des revendications 21 à 25, **caractérisé en ce que** le champ d'identification (62) désigne une fonction qui est affectée à l'information concernant le fonctionnement du véhicule automobile (1) ou par laquelle l'information concernant le fonctionnement du véhicule automobile (1) est produite ou traitée.

27. Procédé (20) selon l'une quelconque des revendications 19 à 26, **caractérisé en ce que** le protocole (60) ne comprend pas de désignation de l'appareil de commande émetteur.

28. Procédé de fonctionnement d'un module de commande pour commander une fonction d'un véhicule automobile (1) et/ou pour délivrer, en particulier par voie optique ou acoustique, une information concernant le fonctionnement du véhicule automobile (1), dans lequel le module de commande est mis en oeuvre sur un appareil de commande, dans lequel le module de commande comprend une interface (160) pour saisir ou délivrer l'information concernant le fonctionnement du véhicule automobile (1), dans lequel on communique via l'interface (160) au moyen d'un protocole (60), qui comprend un champ opérationnel (61) pour l'identification d'une tâche à exécuter au moyen de l'information concernant le fonctionnement du véhicule automobile (1), **caractérisé en ce que** le protocole (60) ne comprend pas de désignation de l'appareil de commande.

29. Procédé selon la revendication 28, **caractérisé en ce que** le protocole (60) comprend un champ de données (63) avec une valeur pour l'information concernant le fonctionnement du véhicule automobile (1).

30. Procédé selon la revendication 28 ou la revendication 29, **caractérisé en ce que** le protocole (60) comprend un champ d'identification (62) pour l'identification de l'information concernant le fonctionnement du véhicule automobile (1).

31. Procédé selon la revendication 28, 29 ou 30, **caractérisé en ce que** le champ opérationnel (61) comprend une information qui indique si le protocole (60) se réfère à un message à émettre ou à un message reçu.

32. Procédé selon la revendication 28, 29 ou 30, **caractérisé en ce que** le protocole (60) comprend un champ d'information pour caractériser un message à émettre ou un message reçu.

33. Procédé selon l'une quelconque des revendications 30 à 32, **caractérisé en ce que** le champ d'identification (62) désigne une fonction qui est affectée à l'information concernant le fonctionnement du véhicule automobile (1) ou par laquelle l'information concernant le fonctionnement du véhicule automobile (1) est produite ou traitée.
